(19)

**Europäisches Patentamt**
**European Patent Office**
**Office européen des brevets**

(11) **EP 4 303 765 B1**

(12) **EUROPEAN PATENT SPECIFICATION**

(45) Date of publication and mention
of the grant of the patent:
**26.02.2025 Bulletin 2025/09**

(51) International Patent Classification (IPC):
**G06N 3/084** (2023.01)   **G06N 3/065** (2023.01)
**G06N 3/0442** (2023.01)   **G06N 3/048** (2023.01)

(21) Application number: **22183567.1**

(22) Date of filing: **07.07.2022**

(52) Cooperative Patent Classification (CPC):
**G06N 3/084; G06N 3/0442; G06N 3/065;**
G06N 3/048

(54) **RECURRENT NEURAL NETWORK AND RECURRENT NEURAL NETWORK DEVICE AND METHOD FOR TRAINING A RECURRENT NEURAL NETWORK**

REKURRENTES NEURONALES NETZWERK UND VORRICHTUNG FÜR EIN REKURRENTES NEURONALES NETZWERK SOWIE EIN VERFAHREN ZUM TRAINIEREN EINES REKURRENTEN NEURONALEN NETZWERKS

RÉSEAU NEURONAL RÉCURRENT ET DISPOSITIF DE RÉSEAU NEURONAL RÉCURRENT ET PROCÉDÉ DE FORMATION D'UN RÉSEAU NEURONAL RÉCURRENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2024 Bulletin 2024/02**

(73) Proprietor: **HORN Entwicklungsgesellschaft mbH**
**81669 München (DE)**

(72) Inventors:
- **EFFENBERGER Dr.,Felix**
 **60528 Frankfurt am Main (DE)**
- **SINGER, Prof. Dr. Dr. hc., Wolf**
 **60528 Frankfurt am Main (DE)**

(74) Representative: **Kramer Barske Schmidtchen**
**Patentanwälte PartG mbB**
**European Patent Attorneys**
**Landsberger Strasse 300**
**80687 München (DE)**

(56) References cited:
- **KONSTANTIN RUSCH T ET AL: "Coupled Oscillatory Recurrent Neural Network (coRNN): An accurate and (gradient) stable architecture for learning long time dependencies", ARXIV.ORG, CORNELL UNIVERSITY LIBRARY, 201 OLIN LIBRARY CORNELL UNIVERSITY ITHACA, NY 14853, 2 October 2020 (2020-10-02), XP081776726**
- **MIGUEL ROMERA ET AL: "Vowel recognition with four coupled spin-torque nano-oscillators", ARXIV.ORG, CORNELL UNIVERSITY LIBRARY, 201 OLIN LIBRARY CORNELL UNIVERSITY ITHACA, NY 14853, 8 November 2017 (2017-11-08), XP081060865, DOI: 10.1038/ S41586-018-0632-Y**
- **TRISCHLER ADAM P ET AL: "Synthesis of recurrent neural networks for dynamical system simulation", NEURAL NETWORKS, vol. 80, 20 April 2016 (2016-04-20), pages 67 - 78, XP029573785, ISSN: 0893-6080, DOI: 10.1016/ J.NEUNET.2016.04.001**

EP 4 303 765 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a recurrent neural network device.

Technological background and problem to be solved

Neural networks are widely known in the art. Examples are the feed-forward networks, deep and convolutional neural networks (DNN), reservoir computing networks, recurrent neural networks (RNN), and other types of neural networks.

Despite their attractive properties, RNNs are less explored than the purely feed forward DNNs because they are difficult to train with the back propagation through time (BPTT) algorithm due to the exploding and vanishing gradients (EVG) problem. A number of approaches have been proposed to make training of recurrent networks more tractable, from gradient scaling over restrictions on the recurrent weight matrix to gated architectures.

N. Benjamin Erichson et al., "LIPSCHITZ RECURRENT NEURAL NETWORKS", arXiv:2006.12070v3 [cs.LG] 24 Apr 2021 describe one of such approaches in which the RNN is viewed as continuous-time dynamical system described by a linear component and a Lipschitz non-linearity. Adam P. Trischler et al., "Synthesis of recurrent neural networks for dynamical system simulation", Neural Networks (80) pp. 67-78, XP29573785, DOI: 10.2016/J.neunet.2016.04.001, describe an algorithm for training recurrent neural networks.

In other recent approaches, attempts have been made to leverage the complex dynamics of coupled oscillator networks for computations. For example, in one approach directed to hardware implementation, M. Romera et al. "Vowel recognition with four coupled spintorque nano-oscillators", Nature 563, 230-234, DOI: 10.1038/s41586-018-0632-y (2018), and M. Romera, et al. "Binding events through the mutual synchronization of spintronic nanoneurons", Nat. Commun. 13, 883, DOI: 10.1038/s41467-022-28159-1 (2022), describe spintorque nano-oscillators as natural candidates for building hardware neural networks made of coupled nanoscale oscillators as potential hardware implementations.

T. Konstantin Rusch and Siddhartha Mishra, "COUPLED OSCILLATORY RECURRENT NEURAL NETWORK (CORNN): AN ACCURATE AND (GRADIENT) STABLE ARCHITECTURE FOR LEARNING LONG TIME DEPENDENCIES", arXiv: 2010.00951v2 [cs.LG] 14 Mar 2021, (hereinafter prior art 1 = PA1) describes another one of these approaches, which is directed to the analysis of the performance of the corresponding algorithms, and in which a model of coupled oscillators is used in a RNN to create a coupled oscillatory Recurrent Neural Network (coRNN). The coRNN is trained using the BPTT algorithm and the paper describes that the EVG problem is mitigated with this coRNN.

W. Moy et al. "A 1,968-node coupled ring oscillator circuit for combinatorial optimization problem solving", Nat Electron (2022), DOI:10.1038/s41928-022-00749-3, (hereinafter prior art 2 = PA2) describes a scalable ring-oscillator-based integrated circuit as an alternative to quantum-, optical- and spintronic-based approaches for computational architectures.

The different prior art approaches are directed to either mere task performance without any hardware implementation or to hardware implementation with relatively simple tasks or to solving specific application problems. At least some of the approaches need high computing power and/or specific temperatures both leading to high energy consumption.

Therefore, it is an object of the present invention to provide a solution for a computational architecture design that leverages the complex dynamics of networks of coupled damped harmonic oscillators, and that can be implemented equally and efficiently in hardware such as in electric digital or analogue hardware, e.g., in complimentary metal-oxide-semiconductor (CMOS) technology, and in software and that can be reliably trained with the back propagation through time (BPTT) algorithm and that is energy consumption efficient.

Solution and advantageous effects

This object is achieved by a recurrent neural network device according to claim 1.

Additional improvements are given in the dependent claims.

The RNNs of the present teachings may differ from known RNNs by several features, a very powerful one being differing natural frequencies of the damped harmonic oscillators.

Other optional powerful features are time delays in the connections and/or differing damping factors and/or a multilayer structure with specific connection structures in the same layer and/or different feedforward and feedback connections between the layers and/or different distributions of the natural frequencies between the layers.

The introduction of oscillating units allows for higher dimensional dynamic phenomena such as resonance, entrainment, synchronization, phase shifts and desynchronization and permits the generation of higher dimensional dynamic landscapes in a state space. The potential introduction of heterogeneity = non-homogeneity enhances these effects.

The design with oscillatory units interacting in a recurrent network allows designs of computational architectures that can be implemented equally in hardware or software and/or allows effective training of the networks using BPTT and/or allows implementation in semiconductor devices in which the final setting of the parameters of the recurrent network can be done after the training using software algorithms.

Additional features and advantages follow from the description of embodiments referring to the drawings, which show:

Fig. 1    a schematic connection diagram of a first embodiment of a recurrent neural network with n damped harmonic oscillators and connections between all n damped harmonic oscillators;

Fig. 2    in a) a schematic diagram of a damped translatory mechanical harmonic oscillator and in b) a schematic diagram of a damped electrical RLC harmonic oscillator;

Fig. 3    a schematic circuit diagram of a second embodiment of a neural network with n damped harmonic oscillators showing only the connections between the first oscillator and the other oscillators;

Fig. 4    a schematic circuit diagram of one of the damped harmonic oscillators of the second embodiment of the neural network of Fig. 4 showing details of the input/output node of the same;

Fig. 5    in a) a schematic diagram of a VCO, in b) a schematic graph of the output power versus the frequency of such a VCO, and in c) an exemplary schematic CMOS implementation of such a VCO;

Fig. 6    in a) the variance of the power spectral densities of the MNIST data for number 7 shown in b);

Fig. 7    in a) the waveform of one sample of speech data of a spoken digit of 1s length, and in b) the variance of the power spectral densities computed across the power spectral densities of 1000 samples, and in c) a diagram illustrating the increase in performance between a one-layer NHHORNN and a two-layer NHHORNN with the same number of cells in processing such data;

Fig. 8    a schematic diagram of a recurrent neural network of a third embodiment with diversity in the connectivity between groups of network cells in a general representation in a) and in different representations for explanation of the connectivity in b) to d);

Fig. 9    a schematic diagram of a two-layered recurrent neural network of a fourth embodiment with a first layer corresponding to the third embodiment of Fig. 8;

Fig. 10   a schematic diagram of a recurrent neural network of a fifth embodiment with diversity in the connectivity between groups of network cells in a general representation in a) and in a different representation for explanation of the connectivity in b);

Fig. 11   a schematic diagram of a three-layered recurrent neural network of a sixth embodiment with a first layer corresponding to the first embodiment of Fig. 1 in a) and a schematic representation of the layers in b), and

Fig. 12   an example of a recognition certainty level in MNIST recognition with a small NHHORNN of the present teachings.

In the following description of embodiments, terms written as one or more letters in bold print like **U** or **y** or **LC** indicated as $\in R^n$ denote a vector with n vector elements $U_i$ or $y_i$ or $LC_i$ (i = 1, 2, ..., n) which are an element $\in$ of the real numbers R and terms written as one or more letters in bold print like **W** indicated as $W \in R^{n \times m}$ denote an (n x m)-element matrix (i = 1, 2, ..., n; j = 1, 2, ..., m) with matrix elements $w_{i,j}$ which are an element $\in$ of the real numbers R.

The inventors started from considerations of biological neuronal systems such as the cerebral cortex. Neurobiological investigations of the cerebral cortex indicate that these neuronal networks comprise highly complex, non-linear dynamics capable of generating highdimensional spatio-temporal patterns in a self-organized manner. These patterns manifest themselves as frequency varying oscillations, transient synchronisation or desynchronisation phenomena, resonance, entrainment, phase shifts, and travelling waves.

The present invention implements such principles realized in natural neuronal systems in a new manner focussing on oscillatory units interacting in a recurrent network for the design of computational architectures that can be implemented equally in hardware or software.

The superior performance in comparison to prior art systems has been proven by quantitative assessment of task performance on a number of standard benchmark tests for pattern recognition. Specifically, the recurrent networks of the present teachings were tested regarding performance on pattern classification tasks on the well-known MNIST hand written digits data set, the more challenging EMNIST data set comprised of hand written digits and letters, and the much harder Omniglot data set consisting of 1623 different handwritten character classes from 50 different alphabets, as well as on speech recognition tasks based on the Free Spoken Digit Dataset that consists of recordings of 3000 spoken digits of 6 speakers. The different types of tasks already show that the recurrent neural networks of the present teachings excel on recognition of patterns in time series data independent of the actual content type of the tasks.

The biologically inspired recurrent neural networks of the present teachings are especially suitable for hardware implementation with low energy consumption and they are excellent with respect to learning speed, noise tolerance, hardware requirements and number of systems variables when compared to prior art RNNs with gated architectures such as Long Short-Term Memory (LSTM) and Gated Recurrent Unit (GRU) networks. In addition, analysis of these recurrent neural networks of the present teachings allows to identify the underlying mechanisms that bring about this increased task performance.

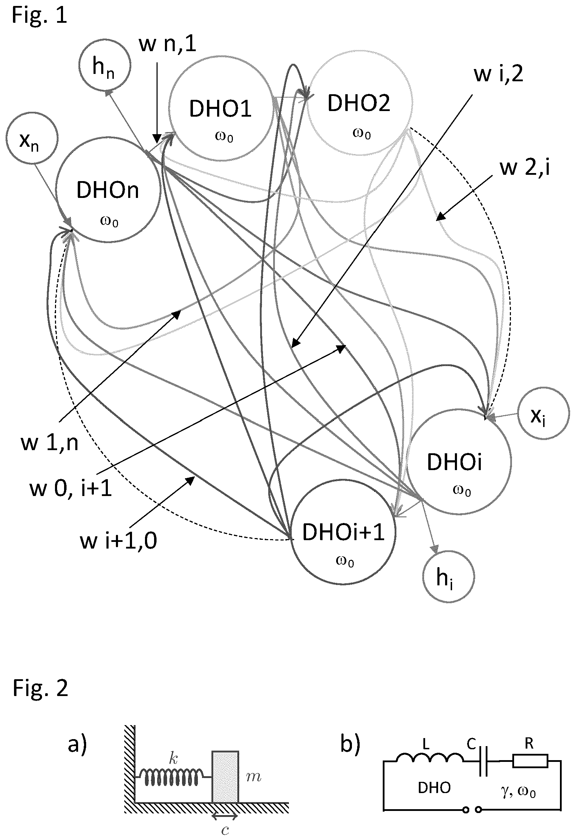

The recurrent neural networks (RNNs) of the present teachings are explained starting with a RNN developed by present inventors as a basic model and schematically represented for explanatory purposes in Fig. 1.

The basic model of the RNN can be considered as being composed of n damped harmonic oscillators (DHOi, i= 1, 2, ...., n)) that share the essential dynamic features, i.e., the oscillatory properties defined by a natural frequency $\omega_0$ and dampening factor $\gamma$. Such a RNN is a homogeneous recurrent neural network composed of identical DHO cells. The cells are connected in an all-to-all fashion with no conduction delays and all nodes are tuned to the same preferred frequency (see Fig. 1). Such a homogeneous recurrent network composed of identical DHO cells will be identified as Homogenous Harmonic Oscillator RNN (HHORNN) in the present teachings and represents a first non-limiting embodiment of the present invention. Such HHORNNs have been trained on a set of benchmark tasks using the backpropagation through time (BPTT) algorithm and allowing gain adjustments of all connections including the input connections to the network nodes, the recurrent connections and the output connections.

The oscillation of each single DHO cell of such a HHORNN can be considered as following the general second order differential equation (1) for damped harmonic oscillators of

$$x_i(t): \ddot{x}_i(t) + 2\beta_i\dot{x}_i(t) + \omega_{0i}{}^2 x_i(t) = 0 \tag{1}$$

with $\beta_i$ = damping factor and $\omega_{0i}$ = natural frequency of an undamped oscillation such as $\beta_i = c_i/2m_i$ and $\omega_{0i}{}^2 = k_i/m_i$, $m_i$ = mass, $k_i$ = spring constant and $c_i$ = viscous damping constant for a corresponding damped translatory mechanical harmonic oscillator DHOi (see Fig. 2 a), or $\beta_i = R_i/L_i$ and $\omega_{0i}{}^2 = 1/L_iC_i$, $R_i$ = resistance, $L_i$ = inductance and $C_i$ = capacity for a corresponding damped electrical RLC harmonic oscillator DHOi (see Fig. 2 b)), and the like for other types of damped harmonic oscillators. In the HHORNNs, $\beta_i = \beta_j$ and $\omega_{0i}{}^2 = \omega_{0j}{}^2$ for all i,j. Nevertheless, the above notation with indices i, j is also used for the HHORNNs because this more general description can be also used for the description of the DHOs of other RNNs of the present teachings.

The electrical properties of a network of coupled electrical RLC circuits that are designed to have certain properties of biological neural networks can be defined as follows: A series of connected electrical RLC circuit driven by an external input for which the Kirchhoff equation for voltages is valid, follows the equation

$$U_L + U_R + U_C = U_{\text{ext}} \tag{2}$$

Equation (3) follows from introducing the resistance R, the inductance L and the capacity C in equation (2)

$$L\frac{\mathrm{d}I(t)}{\mathrm{d}t} + RI(t) + U(0) + \frac{1}{C}\int_0^t I(\tau)d\tau = U_{ext}(t) \tag{3}$$

A system of n additively coupled DHOs implemented by RLC circuits described by equation (3) and driven by a time-varying external input $\mathbf{U}_{\text{ext}}(t) \in \mathrm{R}^n$ and differentiated once to obtain a system of ordinary differential equations can be written in vector form with input $\mathbf{I}(t) \in \mathrm{R}^n$ as equation (4)

$$\frac{\mathrm{d}^2\mathbf{I}(t)}{\mathrm{d}t^2} + \frac{R}{L}\frac{\mathrm{d}\mathbf{I}(t)}{\mathrm{d}t} + \frac{1}{LC}\mathbf{I}(t) = \frac{1}{L}\frac{\mathrm{d}\mathbf{U}_{\text{ext}}(t)}{\mathrm{d}t} \tag{4}$$

The following is an important characteristic of the RNNs of the present teachings. We assume and design the neural networks such that any external input into any DHO is determined by non-linear coupling of the activity across the recurrent neural network and the external signals. This non-linear coupling is expressed as equation (5)

$$\frac{\mathrm{d}\mathbf{U}_{ext}(t)}{\mathrm{d}t} = F_{NL}\left(\frac{\mathrm{d}\mathbf{I}(t)}{\mathrm{d}t}, \mathbf{S}_{ext}\right) = \sigma\left(\mathbf{W}\frac{\mathrm{d}\mathbf{I}(t)}{\mathrm{d}t} + \mathbf{S}_{ext}\right) \tag{5}$$

wherein $W \in R^{n \times n}$ denotes pairwise coupling weights $w_{i,j}$ as an (n x n)-element matrix (i = 1, 2, ..., n; j = 1, 2, ..., n) and $\mathbf{S}_{ext} = \mathbf{S}_{ext}(t) \in R^n$ is the vector of the input signal.

To obtain a final system of first order differential equations $\mathbf{x} = \mathbf{l}(t)$ and $\mathbf{y} = d\mathbf{l}(t)\,dt$ are substituted in equation (4) to obtain equations (6)

$$\frac{d\mathbf{y}}{dt} = -\frac{R}{L}\mathbf{y} - \frac{1}{LC}\mathbf{x} + \frac{1}{L}F_{NL}(\mathbf{y}, \mathbf{S}_{ext})$$

$$\frac{d\mathbf{x}}{dt} = \mathbf{y}$$

$$(6)$$

The equations (6) describe a HHORNN shown in Fig. 1, wherein the DHOs are implemented as RLC circuits as shown in Fig. 2 b. However, in order to train the HHORNN using BPTT, a discrete time description of the HHORNN is needed. This in turn requires a numerical

$$\mathbf{y}_{t+1} = \mathbf{y}_t + \tau(-\frac{R}{L}\mathbf{y}_t - \frac{1}{LC}\mathbf{x}_t + \frac{1}{L}F_{NL}(\mathbf{y}, \mathbf{S}_{ext})$$

$$\mathbf{x}_{t+1} = \mathbf{x}_t + \tau\mathbf{y}_t$$

$$(7)$$

integration scheme. For this purpose, a well-known Euler discretization of (6) with time constant $\tau$ can be used resulting in equations (7)

The above equations describe a HHORNN as shown in Fig. 1, wherein the DHOs are implemented as RLC circuits as shown in Fig. 2 b, that can be trained as recurrent neural network. Training the HHORNN using BPTT means that the pairwise coupling weights $w_{i,j}$ in $W \in R^{n \times n}$ are adjusted to minimize the error (costs). In other words, the connections $w_{i,j}$ between the cells DHOi are adjusted in the representation shown in Fig. 1. This training includes the coupling weights for the input and the output as will be also evident from the description of the input unit and the output unit further below.

Each of these the connections $w_{i,j}$ between the cells DHOi can be set (adjusted) to a transmission characteristic $T_{i,j} = w_{i,j} \times h_i$ with $w_{i,j} \in R$ being the pairwise coupling weights and $|w_{i,j}| \leq 10$. If a pairwise coupling weight is set to $|w_{i,j}| = 0$, the connection from cell DHOi to cell DHOj is not present or interrupted.

The recurrent neural networks of the present teachings do not only cover the above described HHORNNs. The recurrent neural networks of the present teachings also cover recurrent neural networks composed of DHOs that are non-homogenous. Non-homogenous means that they do not comprise only one type of DHO cells with the same $\beta$ = damping factor and the same $\omega_0$ = natural frequency of an undamped oscillation of the DHO but that the plurality of n damped harmonic oscillators (DHOi, i = 1 to n) of the RNN comprises at least two different types of damped harmonic oscillators, wherein each of the at least two different types of damped harmonic oscillator differs in at least the parameter $\omega_{0i}$ = natural frequency of an undamped oscillation from the other type(s) of damped harmonic oscillator(s).

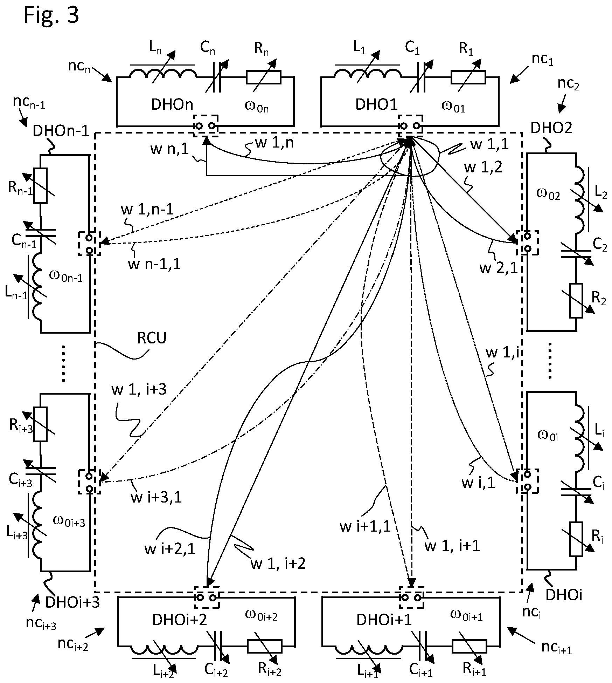

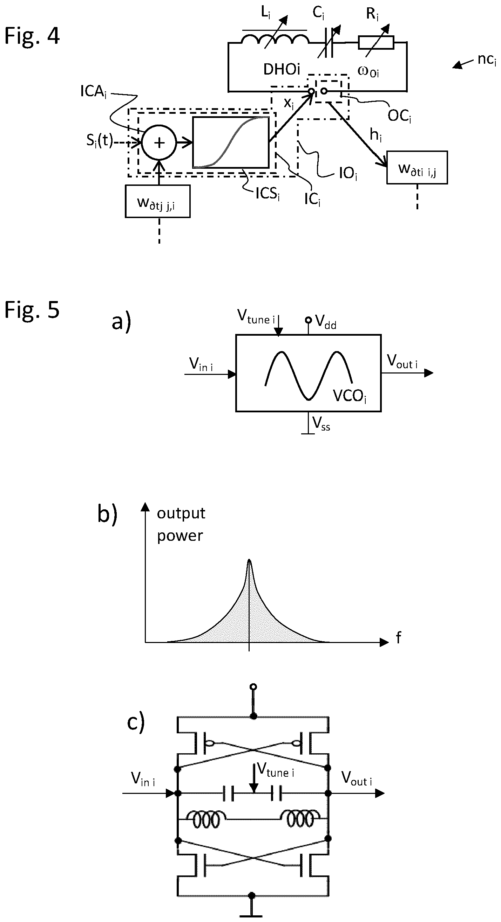

Such a recurrent network composed of DHO cells with at least two different types of damped harmonic oscillators will be identified as Non-Homogenous Harmonic Oscillator RNN (NHHORNN) in the present teachings. Such a NHHORNN represents a second non-limiting embodiment of a recurrent neural network of the present teachings. A NHHORNN with n damped harmonic oscillators is described referring to Fig. 3 and 4.

In Fig. 3, the n damped harmonic oscillators DHOi (i = 1, 2, ..., n) are schematically shown similar to the arrangement in Fig. 1 in a kind of circular arrangement, although it is a rectangle in Fig. 3. The circular-like arrangement is shown only for explanatory purposes to simplify the schematic representation of the connections. The number n of damped harmonic oscillators of the present teaching is $n \geq 8$, such that the representation in Fig. 3, if n = 8 is selected, shows all 8 damped harmonic oscillators DHOi, i = 1, 2, ... , 8. The damped harmonic oscillators DHOi are shown as damped electrical RLC harmonic oscillators. Each of the damped harmonic oscillators is shown to comprise a resistance $R_i$, an inductance $L_i$ and a capacity $C_i$ which can be individually set or predetermined for each of the harmonic oscillators DHOi. As a consequence, in particular the damping factor $\beta_i$ and the natural frequency $\omega_{0i}$ of the undamped oscillation of each of the damped harmonic oscillators can be set or predetermined independent of the corresponding parameters of each of the other damped harmonic oscillator DHOj. A NHHORNN comprises at least two damped harmonic oscillators DHOi with different natural frequency $\omega_{0i}$ of the undamped oscillation.

It is emphasized that the HHORNNs and NHHORNNs are not limited to an implementation with electric oscillators of the RLC type but could be also implemented e.g. with mechanical damped harmonic oscillator DHOs . In this case the corresponding damped translatory mechanical harmonic oscillators schematically shown in Fig. 2 a) follow the same general second order differential equation (1) for damped harmonic oscillators with $\beta_i = c_i/2m_i$ and $\omega_{0i}^2 = k_i/m_i$, $m_i$

= mass, $k_i$ = spring constant and ci = viscous damping constant for a corresponding damped translatory mechanical harmonic oscillator DHOi. Other alternatives are e.g. implementations with secondary (galvanic) cells, with chemical oscillatory systems such as coupled Belousov-Zhabotinsky reactions, and, of course, in a computer program/software.

In the embodiment of an NHHORNN shown in Fig. 3, an all-to-all connectivity including self-connectivity, i.e., the connection of the DHO to itself, is provided, meaning that the input/output nodes IOi of all damped harmonic oscillators DHOi are potentially connected to the input/output nodes $IO_j$ of all other damped harmonic oscillators DHOj and to the own input/output node IOi for input and for output. In Fig. 3, for the purpose of illustration, only the connections from the first damped harmonic oscillator DHO1 to all other damped harmonic oscillators DHO2 to DHOn, namely w1,2, w1,3, ... to w1,n, and the connections from the input/output nodes of all other damped harmonic oscillators DHOj, j = 2, 3, ..., n, to DHO1, namely w2,1, w3,1, ... to wn,1, and the connection to itself w1,1 are shown. The other connections of the all-to-all connectivity are also potentially present but not shown for the reason of simplifying the illustration. The characteristics of the connections wi,j and their implementation will be described further below.

Referring to Fig. 4, one cell $nc_i$ of the damped harmonic oscillators DHOi and its input/output node IOi are shown in more detail. Such a single dynamic harmonic oscillator DHOi with its input/output node IOi forms one cell $nc_i$ of the recurrent neural network. The input/output node IOi comprises an input connection ICi generating the cell input $x_i$. The input connection ICi comprises an adder $ICA_i$ receiving all inputs via the connections wj,i from itself and all other cells of the recurrent neural network and, if the corresponding input/output node IOi of the corresponding cell is connected to the input receiving the external signal S to be processed, the adder $ICA_i$ is adapted to additionally receive the corresponding input signal Si (t), if applicable. For this reason, the input of Si (t) is shown with a hatched arrow line representing the potential connection. The signal S and the input of the signal S will be described further below.

The output of the adder $ICA_i$ is connected to an input element $ICS_i$ which implements a non-linear, preferably sigmoid-like, transfer function to generate the cell input $x_i$ from the output signal of the adder $ICA_i$. Semiconductor circuits for implementing a sigmoid-like transfer function either in single type transistor technology or CMOS technology are described e.g. in US 2018/0307977 A1. Therefore, the description of a specific hardware implementation of this input element $ICS_i$ is omitted here as US 2018/0307977 A1 includes numerous examples.

The input/output node IOi comprises an output connection OCi, which outputs the resulting damped harmonic oscillation $h_i$ to the corresponding connections $w_{i,j}$.

Fig. 4 does not show in detail the input in the DHO and the output from the DHO. Only by way of a non-limiting example, it is referred to Fig. 5a) to c) showing a Voltage Controlled Oscillator (VCO), which could be an implementation of the DHO. Such a VCO could be implemented, for example, in CMOS technique as schematically shown in Fig. 5c). In Fig. 5c), the input voltage $V_{in\,i}$ and the output voltage $V_{out\,i}$ are shown at the corresponding nodes. In this respect, it has to be noted that, in case of such a complementary CMOS VCO, the input and output voltages are phase shifted by 180° such that, if the same should be in phase, one inverter could be added either at the input or the output side. However, for the purpose of implementing the HHORNNs and the NHHORNNs and for calculating the characteristics of the HHORNNs/NHHORNNs, it is irrelevant whether there is such a phase shift between the input and output or not, as both is possible in this implementation.

Returning to Fig. 3 and 4, the representations of the connections wj,i for the input and of the connections $w_{i,j}$ for the output include additionally the indications $\partial t_i$ and $\partial t_j$. These indications indicate optional time delays in the connections, which can be present but do not need to be present (=optional) and which are described further below.

All these connections wi,j form a recurrent connection unit RCU which comprises all connections wi,j between the input/output nodes IOi of all cells of the recurrent neural network. The recurrent connection unit RCU is represented by the hatched box RCU in Fig. 3. All the connections of the recurrent connection unit RCU can be described in a (n x n) matrix **W** with the matrix elements wi,j (i, j = 1, 2, ..., n).

These recurrent neural networks implemented as HHORNNs or NHHORNNs are suitable for effective processing of time-series input data S(t). The RNN comprises an input unit IU for receiving and inputting such time-series input data S (t) and an output unit OI adapted for outputting the result, i.e., the output data O(t).

In the simplest form, the input unit IU for receiving and inputting such time-series input data S (t) is one single connection to the input connection ICi of the input/output node of one of the cells DHOi, as exemplary shown in Fig. 4. The simplest form of the output unit OI adapted for outputting the result, i.e., the output data O (t), is a connection to the output connection $OC_i$ of the input/output node of one of the cells DHOi, which could be the same or another cell than the one connected to the input unit. The output unit is additionally adapted to start the output at a starting time OST which is set to be later than the first input of input data S (t) by at least five times the time series interval ti 1 of input data S (t) (described further below) after the receipt of the first input of input data S (t), preferably ten times and more preferably twenty times ti 1 thereafter. The output data are output with an output time interval to2 which can be identical to ti 1 or different. The number of cells forming the input unit or connected to the input unit and the number of cells forming the output unit or connected to the output unit can be freely selected. For example, if the recurrent neural network comprises n = 16 damped harmonic oscillators, all 16 cells could be connected to receive the input data S and 8 of the 16 cells could from the output unit. Or 8 of the 16 cells could be connected to receive the input data S and the other 8 of the 16 cells could from the output unit, and so on.

The simplest form of the recurrent neural network of the present teachings is a network with n = 8 damped harmonic oscillators. The number of damped harmonic oscillators is not limited per se but for practical reasons the number of DHOs in a network layer may be limited to $10^6$ or preferably to 250000 or 102400 or 40000 or 10000 or 2500 or 1024 or 512.

The above described RNN of Fig. 3 can be described by equations (8)

$$\frac{dy}{dt} = -\boldsymbol{\beta} \cdot \boldsymbol{y} - \boldsymbol{\omega_0}^2 \cdot \boldsymbol{x} + \frac{1}{L}\sigma(W\frac{dI(t)}{dt} + S_{\text{ext}}(t))$$

$$\frac{dx}{dt} = \boldsymbol{y} \tag{8}$$

$$\text{wherein } \boldsymbol{\beta} \in \mathbb{R}^n \text{ with } \beta_i = \frac{R_i}{L_i}, \ \boldsymbol{\omega_0}^2 \in \mathbb{R}^n \text{ with } {\omega_0}^2{}_i = \frac{1}{L_iC_i}, \text{and } \frac{1}{L} \in \mathbb{R}^n \text{ with } \left[\frac{1}{L}\right]_i = \frac{1}{L_i}.$$

This description corresponds to equations (6) with a replacement of the scalars R/L and 1/LC and 1/L by the corresponding vectors. In order to train the NHHORNN, a numerical solution method is needed. For this purpose, a well-known Euler discretization of (8) with time constant $\tau$ can be used resulting in equations (9)

$$y_{t+1} = y_t + \tau(\frac{1}{L}\sigma(W\frac{dI(t)}{dt} + S_{\text{ext}}(t)) - \boldsymbol{\beta} \cdot y_t - \boldsymbol{\omega_0}^2 \cdot x_t)$$

$$x_{t+1} = x_t + \tau y_t \tag{9}$$

The above equations describe a NHHORNN as shown in Fig. 3, 4, that can be trained as a recurrent neural network. Of course, the above equations can be equally used to describe a HHORNN as shown in the Fig. 1, if $\beta_i = \beta_j$ and ${\omega_0}_i^2 = {\omega_0}_j^2$ for all i,j.

In the following, the original setup for such a recurrent neural network of the present teachings and the training thereof are explained.

As already mentioned initially, the training of recurrent neural networks with the BPTT technique is fundamentally difficult due to the well-studied issue of exploding and vanishing gradients (EVG problem). This EVG problem occurs when gradients of the loss function used for training for long-term dependencies are not able to propagate properly through recurrent iterations of the recurrent network. However, the HHORNNs and as a consequence also the NHHORNNs do not face this problem. The mathematical proof is given in PA1 and will not be discussed here.

One conclusion can be drawn for an implementation in electrical hardware, especially CMOS or other semiconductor implementations: For given values of R and L, the value of the capacity C determines the characteristics of the DHOs. Especially L may be difficult to set in a late stage of a semiconductor implementation, i.e., when the overall structure of the HHORNN or NHHORNN is defined but the HHORNN or NHHORNN still needs to be trained, either initially or to learn "new things". But the capacity can be set relatively easily stepwise or even continuously over a relatively wide range in a late stage by a bank of varactors (= variable capacitors) that are well established semiconductor elements and can be programmed to be changed at any time or otherwise fixedly set with fusions or the like in a late stage of hardware implementation.

Accordingly, the selection of the same parameters $\beta$ and $\omega_0$ for all DHOs in case of a HHORNNN or of the potentially different parameters $\beta_i$ and $\omega_{0i}$ for a NHHORNN for the original or initial setup of the HHORNN/NHHORNN to be trained is one issue of the original setup. In general, it is possible and also effective to simply select the one $\omega_0$ for the DHOs of a HHORNN to be in (=overlap with) the expected frequency range of the input signal. And in general, it is possible and also effective to simply select the different $\omega_0$ for the DHOs of a NHHORNN to cover a wide field of frequencies with preferably overlapping receptive frequency ranges of the DHOs. Overlapping receptive frequency ranges means, referring to Fig. 5 b), that the corresponding DHO can be expected to oscillate at least with a relevant output power amplitude of 1/10 or 1/e of the maximum output power when excited at the corresponding frequency. This wide field of frequencies should, of course, preferably overlap with the expected frequency range of the input signal. The above discussed overlaps are not strictly required for the HHORNN/NHHORNN but much preferred to enhance the performance.

This leads to the input signal S(t). The present invention is designed to process time-series input data (S (t)). These time-series input data (S (t)) can be either discrete or continuous time-series input data (S (t)) with a time series interval ti1 and a time series length TI1, where the time series interval ti 1 of the time-series input data (S (t)) representing either the time interval between subsequent discrete values in case of discrete time-series input data (S (t)) or the time interval between subsequent sampling values of continuous time-series input data (S (t)) such as sine-type signals. That means that the data to be processed are represented as such time-series input data (S (t)).

If the data to be processed are e.g. the MNIST data set, which consists of 60000 samples of handwritten digits where each sample consists of 28 by 28 intensity values representing one hand written digit of one of the digits 0 to 9, the same are turned (transformed) e.g. into a time-series data set D of length TI1 = 784 by collecting the pixels of each digit in scanline order from top left to bottom right. The clock rate 1/ti1 for inputting this time-series data sets the time interval ti1. It is noted that the clock rate corresponding to the time series interval ti 1 can be freely selected.

If the data to be processed are speech data, where each data set consists of speech data of a certain length in real time with relevant frequencies in the range from e.g. 500 to 16000 Hz, the same are sampled at a specific sampling rate and transformed into a time-series data set with a time series interval ti 1 and a time series length TI1.

Whatever the content of the data to be processed is, once they are either originally in the form of time-series input data (S (t)) or transformed into time-series input data (S (t)), the time-series input data (S (t)) to be processed such as the MNIST data set or any other data set represent a plurality of samples of the time-series input data (S (t)) to be processed and the plurality of samples of the time-series input data (S (t)) to be processed have power spectral densities and a variance of these power spectral densities.

The parameters $\omega_{0i}$ = natural frequency of the undamped oscillations of the different types of damped harmonic oscillators of a NHHORNN are preferably set such that, based on a determination of the power spectral density of a plurality of samples of the time-series input data (S (t)) to be processed and the variance of these power spectral densities, the natural frequencies are distributed over the peaks of this variance with one of the natural frequencies set to correspond to the peak of the variance with the lowest frequency and the other natural frequencies are distributed over the frequency range of the variance. In case of a HHORNN, the parameter $\omega_0$ = natural frequency of the undamped oscillations of the damped harmonic oscillators of the NHHORNN can be chosen according to the power spectral density of a plurality of samples of the time-series input data (S (t)) to be processed and the variance of these power spectral densities. The natural frequency $\omega_0$ (for the case of a HHORN) or the natural frequencies $\omega_{0i}$ are preferably set to correspond to a peak of the variance of the power spectral densities of the input.

The connections wi,j between the input/output node IOi of one corresponding cell and the input/output node $IO_j$ of another one of the cells of the recurrent connection unit RCU is set to a transmission characteristic $T_{i,j} = w_{i,j} \times h_i$ with $w_{i,j} \in R$ and $|w_{i,j}| \leq 10$. In other words, the strength/amplitude of the output of the one cell can be set to 0 by $|w_{i,j}| = 0$ or can be set to either amplification by $1 < |w_{i,j}| \leq 10$ or kept at the same level by $|w_{i,j}| = 1$ or weakened by $|w_{i,j}| < 1$ and the output can be inversed with the corresponding amplitudes. It is also possible to set $|w_{i,j}| \leq 5$ or $\leq 3$ or $\leq 2$. This can be implemented by an electric voltage divider or a transmission gate coupling or other known circuitry for the output $h_i$ of the corresponding damped harmonic oscillator. An example of such a transmission gate coupling allowing to set 5 different levels with inversion is shown in Fig. 2 of PA2. Other circuitry can be implemented using an amplifier with a preset amplification ratio, whose amplification ratio is preset via a value stored in a memory bank for setting the connections values.

These connections and their characteristics are elements to be trained in the training of the HHORNN of Fig. 1 and the NHHORNN of Fig. 3.

As already mentioned before, although the NHHORNN of Fig. 3 does not include such transmission delays, the connection wi,j between the input/output node IOi of one corresponding cell and the input/output node $IO_j$ of another one of the cells of the recurrent connection unit RCU can be set not only to a transmission characteristic $T_{i,j}$ as described above but can be optionally also set to a transmission delay. Such an output time delay $\partial t_{i,j} = k_{i,j} \times \Delta t$, $k_{i,j} = 0, 1, ...., k, 0 \leq k \leq kmax$, ti $1/10 \leq \Delta t \leq ti 1$ and $k_{i,j} \times \Delta t \leq 50$ ti1, can be, for example, implemented by a series connection of inverters or a clocked output gate for the transmission of the output $h_i$ of the corresponding damped harmonic oscillator. If such transmission delays are provided, the NHHORNN can be described by replacing the term with matrix **W** in equations (9) by the sum of k products of matrices $\mathbf{W_k}$ multiplied with the corresponding vector of the input change at the corresponding time $t_k = t - (kx \Delta t)$ leading to equations (10).

$$y_{t+1} = y_t + \tau(\tfrac{1}{L}\sigma(\sum_{k=0}^{kmax} W_k \frac{dI(t_k)}{dt} + S_{ext}(t)) - \beta \cdot y_t - \omega_0{}^2 \cdot x_t)$$

$$x_{t+1} = x_t + \tau y_t$$

$$(10)$$

The maximum value kmax for k can be set to be 1000 or 500 or 100 or smaller than 100 such as 50, 40, 30, 20, 16 or 12 or 10 or 8 or 5 or 4 or 3 or 2. Preferred are values for kmax in the range of 30 to 10. Important to note is that the complexity of the description of the system is not increased by introducing the delays because the matrices $\mathbf{W_k}$ include only one element $\neq 0$ at each position i,j for all k. Therefore, the calculation effort for the training is not increased but the performance of the HHORNNs/NHHORNNs is increased.

The input signal S(t) is input via an input unit IU which is connected to the input connection ICi of the input/output node(s) of one or more of the cells nci. The input unit IU can be formed either by selected ones of the cells nci of the neural network itself or by a separate unit. The input signal can be input in this way into one single cell or a number nl of cells with nl $\leq$ n. The data forming the input signal can be input serially or in parallel into plural cells. Accordingly, the input signal can be described in general form as

$$S_{\text{ext}}(t) = WI \cdot D(t) \tag{11}$$

wherein $S_{\text{ext}} = S_{\text{ext}}(t) \in R^n$ is the vector of the input signal, $WI \in R^{n \times q}$ denotes pairwise coupling weights $wi_{i,j}$ as an (n x p)-element matrix (i = 1, 2, ..., n; p = 1, 2, ...) for the input into the cell/cells nci of the neural network selected (predetermined) to receive the input from the input unit. For example, if only one cell ncr of the cells nci of the neural network should receive input, this can be described such that only the matrix elements $wi,j$ for i=r (the i-th row) can be different from 0 and for i$\neq$r (all other rows) the matrix elements are 0. If only one data value per input cycle should be input, only one vector element d of the vector $D(t) \in R^q$ has potentially a value $\neq$0, in other words q=1. If a number of q$\neq$1 data values should be input in the same input cycle (time interval ti1), the vector $D(t) \in R^q$ has q elements which potentially have a value $\neq$0.

The above descriptions of the HHORNNs and of the NHHORNNs provide a design tool to study how the electrical properties of the DHOs and their connections, in other words of the "neural circuits", determine the learning capabilities of the system and thus the overall capabilities of the trained network and which design changes lead to which capability or performance changes. The above descriptions of the HHORNNs and of the NHHORNNs also provide a tool to endow the DHOs and their connections with input and output, in other words to implement the HHORNNs/NHHORNNs in software to be run on a correspondingly programmed data processing device. The HHORNNs/NHHORNNs could also be hardwareimplemented with mechanical elements such as spring supported weights, and the important sigmoid-input element could be implemented by a viscoelastic input element or hydraulic or pneumatic input elements with a sigmoid-like force transfer. However, the hardwareimplementation in form of an electric circuitry implementation, in particular the semiconductor circuit implementation, is presently preferred.

The training of the HHORNNs/ NHHORNNs was made on a number of classification benchmark tasks commonly used to evaluate RNN performance. The same was done with LSTM and GRU gated networks, at present the de-facto state of the art for RNN architectures in machine learning.

In all cases, the input data has been presented sequentially to the network in the form of time-series data and the networks were trained in a supervised way using back propagation through time (BPTT). All the networks were implemented in the PyTorch framework and trained with BPTT. To achieve comparability across different network architectures, network sizes were chosen so that the effective number of trainable parameters is the same across all networks, with the default choice being 10000 parameters unless otherwise stated. For all tasks, a training batch size of 128 and the AdamW optimizer were used. For network architectures that suffer from exploding and vanishing gradients (GRU, LSTM), a parameter search in the space of learning rates and gradient scaling values was used to determine an optimal configuration of learning rate and gradient scaling for each model. As a measure for task performance of a network, the classification accuracy on a test set was calculated. To assess learning speed these accuracies were computed throughout the training process, evenly sampled across m training batches.

For the HHORNNs and NHHORNNs that do not suffer from vanishing or exploding gradients, a learning rate of 0.01 was used throughout all experiments, and no gradient scaling was applied. In order to determine the influence of the intrinsic parameters $\beta$ and $\omega_0$ on the HHORNN performance, either optimal $\omega_0$ values were estimated from a data set to be processed using information from the power spectral density of a number of samples together with a grid search for $\beta$ as discussed further below, or a grid search was performed for each data set, assessing learning performance of a HORNN network with all nodes having the same intrinsic parameters $\beta$ and $\omega_0$ chosen from a grid. For each dataset, the parameter set belonging to the network with the highest learning performance was taken and this HHORNN network where all nodes have the same intrinsic parameters, was named the optimal HHORNN network HHORNNopt. Furthermore, the spread of each of the intrinsic parameters over the set of 10 HHORNN networks with the highest learning performances was determined, thus obtaining their minimal and maximal values over the considered set. Using these minimal and maximal values, Non-Homogeneous HORNN networks were generated in which each node was assigned random values such as $\beta_i \in U([\beta min, \beta max])$ and $\omega_{0i} \in U([\omega_0 min, \omega_0 max])$, where U([a, b]) denotes the uniform distribution over the interval [a, b]. This Non-Homogeneous HORNN network and the optimal HHORNN network HHORNNopt were tested to evaluate the influence of the intrinsic oscillation parameters.

Furthermore, tests with overdamped, critically damped and underdamped networks were made but they are not of relevance in this context.

The connections $w_{i,j}$ were initially set according to different strategies to also evaluate their influence. The connections $wi,j$ were initially set to random values chosen from a uniform distribution $U([-\frac{1}{\sqrt{n}}, \frac{1}{\sqrt{n}}])$ where n denotes the number of DHO cells in the network.

Alternatively, weights were chosen according to a Gaussian distribution $N(0, \frac{1}{3n})$. These different choices did not strongly affect final task performance and learning speed. It is also possible to initially set all connections wi,j to $w_{i,j} = 1$ or all wi,j = 0. Furthermore, several instances of networks differing only by their initial weights were trained on the same task and no strong dependence of final task performance on weight initialization was found.

Of course, the choice of the value of the discretization constant has a significant influence on the learning performance. E.g., values between 0.01 and 0.5 were tested (0.01, 0.05, 0.1 0.2, 0.3, 0.4 and 0.5) for MNIST and 0.2 was selected due to the best performance.

Already the HHORNNs vastly outperformed the state of the art RNNs with gated units such as LSTM and GRU with respect to learning speed, absolute performance and noise tolerance at the same number of learnable parameters, particularly in the region of low parameter count.

The NHHORNNs in turn outperformed in all aspects the HHORNNs and consequently even more the state of the art RNNs such as LSTM and GRU.

The inventors could identify several reasons for this gain of function of HHORNNs and NHHORNNs:

(i) the time constants introduced by the discretisation of the damped harmonic oscillator equation act as a smoothing prior in the state space and regularize gradients, making BPTT learning more stable;

(ii) the particular kinetics of the DHOs provide every node with its own memory function which facilitates the encoding of temporal relations and makes the nodes sensitive to the sequence order of inputs;

(iii) the prototypical properties of coupled DHOs allow for dynamic phenomena such as resonance, entrainment, synchronization, phase shifts and desynchronization that permit the generation of high dimensional dynamic landscapes in a state space; and

(iv) the introduction of non-homogenous DHOs, in other words the increase of the heterogeneity of the network, amplifies the effects of (i), (ii) and (iii) allowing such heterogeneous = non-homogeneous HORNNs to respond to the stimuli with more complex, less synchronized patterns.

Reason (iv) even creates a significant above chance level classification of stimuli in the untrained state of the NHHORNNs before any learning/training. Although HHORNNs have such a property, too, the effect is stronger in NHHORNNs. The heterogeneous = non-homogeneous HORNNs project inputs to a high dimensional pre-structured state space even in the untrained state and with randomly selected connections wi,j, which eases the training. In other words, the learning/training process capitalizes on the initial diversification of the response patterns and requires considerably less trials to reach high performance levels.

Regarding reason (i), it is emphasized that the discretization with time constant $\tau$ does not affect the hardware implementation. The discretization is merely a tool to enable numerical calculation of a model and thus training via BPTT, whether the HHORNN or NHHORNN is implemented in hardware or software. The HHORNNs and NHHORNNs and any of its constituting cells turn any input signal into an oscillation, in hardware and in software. Digital signals such as e.g. delta pulses are turned into analogue signals, and these analogue signals (oscillations) make the resonance phenomena stronger. This fact results from the design of the HHORNNs and NHHORNNs, is inevitably inherent in its hardware and software implementations and is independent of the discretization with time constant $\tau$ that only serves efficient training.

The above-described introduction of delay in the connections $w_{i,j}$ increases the heterogeneity and, for the same reason as described with respect to the different preferred frequencies of the DHOs, promotes the overall performance. As a possible rule for the initial setting of such delays, it is possible to introduce a scatter of the coupling delays around a median that corresponds approximately to 1/5 of the cycle duration of the median of the preferred oscillation frequencies. However, this is only a non-limiting example. Other distributions of delay values like e.g. an even delay value distribution between zero delay and 20 times the time series interval ti1 and others are possible as well. The introduction of delays has two effects, first it increases the heterogeneity and second, it introduces a potential reaction delay of the network, which can be considered as a potential retardation interval before providing the output and may represent a kind of intermediate processing result.

The following explanation may provide clues for a better understanding of consequences of the selection and distribution of the natural frequencies of the DHOs. Each DHO is effectively a band pass filter with a "receptive field" defined by the resonant frequency window in which amplitude amplification occurs (see Fig. 5b)). A single, isolated DHO cell of the HHORNN/NHHORNN without feed-back connection can be thought of as generating a convolution of the input signal over time and acts as a band pass filter with selective amplification of signals around its natural frequency $\omega$ by means of resonance. When a self-connection is present as possible and foreseen in the HHORNNs/NHHORNNs by the potential connection wi,i, an adjustment of the gain of the self-connection allows for shifting the natural frequency $\omega$ to a certain extent. In other words, a DHO with self-connection can to a certain extent tune into the input and by means of changing the value of wi,i, can change its receptive field over the course of learning.

As discussed above, the input used for training as well as for probing performance can be pulse inputs or analogue inputs like oscillatory inputs in a narrow sense, irrespective of whether the HHORNNs/NHHORNNs are implemented in hardware or software. The HHORNNs and NHHORNNs of the present teachings will work with both, discrete inputs or analogue oscillatory inputs.

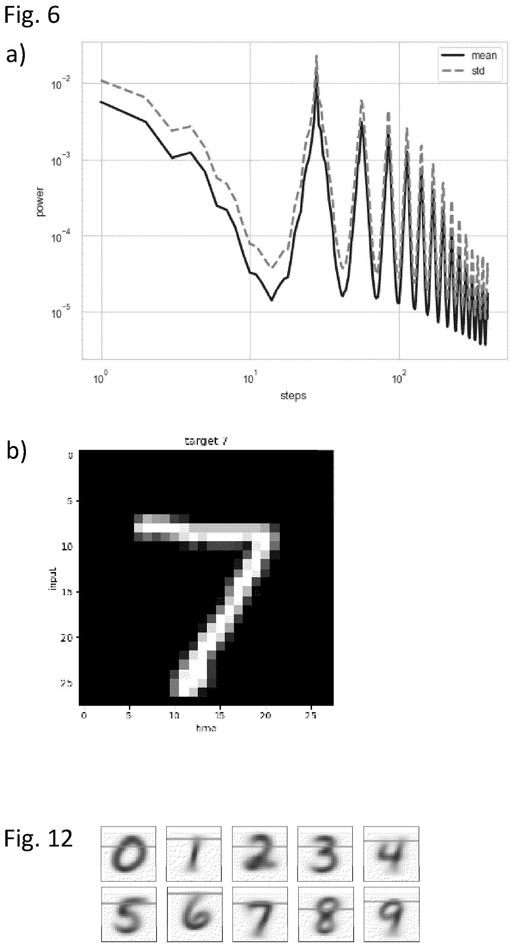

As already described above, if a data set has a pronounced structure such as, for example the MNIST data, it is possible to pre-tune the cells to characteristic frequencies, where the best results are obtained if the resonance frequencies are set at the peaks in the variance, because this allows the network to resonate to the differences of the input signal, i.e., to the stimuli. Fig. 6 shows in a) the variance of the power spectral densities of the MNIST data for number 7 shown in Fig. 6 b), which are time-series input data $S(t)$ of the MNIST data set consisting of 28 by 28 intensity values of the number 7 turned (transformed) into a time-series data D of length $TI1 = 784$ by collecting the pixels of each digit in scanline order from top left to bottom right as described above.

In such a MNIST data set, a vertical line has a period of 28, a line at 45 degrees inclination has a period of 27 or 29, etc. This period is "translated" into frequencies via an input time interval.

This example also helps to understand the different strategies to select the characteristic frequencies of the DHOs. It is possible to select high resonance at precisely selected frequencies, if there is a pronounced structure in the data to be processed, or, if there is no pronounced structure, a broader tuning can be selected.

In the following, the design and effectiveness of multi-layered HHORNNs/NHHORNNs is explained.

Using speech data, the performance was tested with spoken digits. The "Free Spoken Digit Dataset" consisting of 3000 samples of spoken digits 0 to 9 were used, with each sample representing 1s recorded audio recorded with a 8000 Hz sampling rate in mono, and subsampled to 4000 Hz. The 3000 samples represent spoken digits by 6 male speakers with 50 samples per speaker per digit. This approach results in a relatively small (and thus harder to learn) data set of 3000 samples. 10% of these data were used as test data, in other words 300 samples, while 90% of these data were used for training.

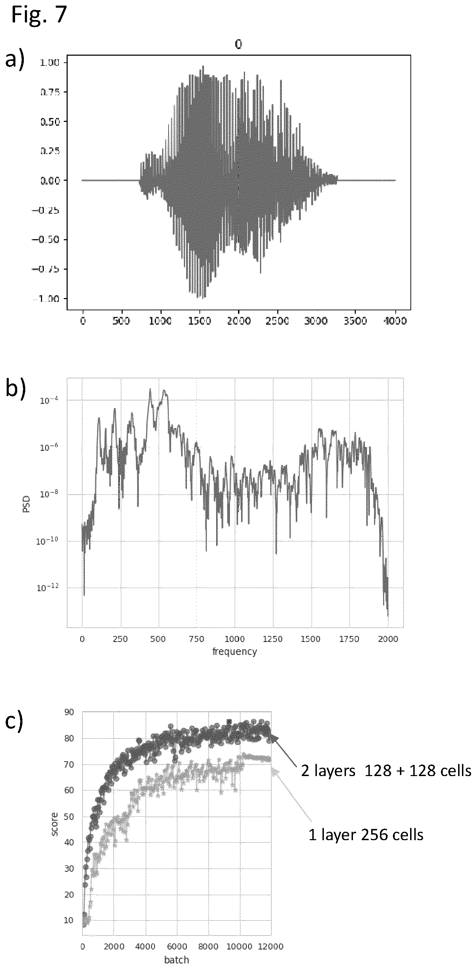

Fig. 7 shows in a) the waveform of one sample of 1s length, and in b) the variance of the power spectral densities computed across the power spectral densities of 1000 samples.

The amplitude values were directly fed as time-series data to the networks, in other words as a 4000-dimensional vector.

The network size of a first NHHORNN trained and fed with the data was n = 256 cells, with the cells arranged in one layer with all-to-all connectivity.

A second NHHORNN with n = 256 cells, but structured in two layers was given the same task, i.e., trained and fed with the same data. The second NHHORNN was divided into a first layer with $n_1 = 128$ cells and a second layer with $n_2 = 128$ cells.

Before describing the layers and the initial set up in detail, some definitions for describing multi-layered HHORNNs/NHHORNNs are given. Let's assume a two-layered network with n cells in total, of which n1 cells are in the first layer, which receives the input signal and is thus the upstream layer in respect of the overall input-output direction, and of which n2 cells (n=n1+n2) are in the second layer, which is downstream in respect of the overall input-output direction, and only cells of the second layer are connected to provide the output signal. All-to-all connectivity within one layer means the same as with the previously described one-layered networks. Forward connection/connectivity means a connection wi,j between the input/output node IOi of at least one of the n1 cells nci of the upstream (e.g. first) network layer and the input/output node $(IO_j)$ of at least one of the cells ncj of the downstream (e.g. second) network layer for transmitting the resulting damped harmonic oscillation $h_i$ output from the node IOi of at least one of the n1 cells nci of the upstream (e.g. first) network layer to the input/output node $(IO_j)$ of at least one of the n2 cells (ncj) of the downstream network layer. Feedback connection/connectivity means a connection wj,i between the input/output node $IO_j$ of at least one of the n2 cells ncj of the downstream (e.g. second) network layer and the input/output node $(IO_i)$ of at least one of the cells nci of the upstream (e.g. first) network layer for transmitting the resulting damped harmonic oscillation $h_j$ output from the node $IO_j$ of the at least one of the n2 cells ncj of the downstream (e.g. second) network layer to the input/output node $(IO_i)$ of the at least one of the n1 cells (nci) of the upstream network layer. A maximum/minimum forward connectivity of X/Y % means that a maximum or minimum of X% of the input/output nodes of 100% of the n1 cells nci of the upstream network layer is potentially connected to the input/output nodes of a maximum or minimum of Y% of the input/output nodes of 100% of the n2 cells ncj of the downstream network layer for transmitting the resulting damped harmonic oscillations $h_i$ output from the corresponding input/output nodes of the n1 cells nci of the upstream network layer to the input/output nodes IOj of the n2 cells ncj of the downstream network layer. Correspondingly, a maximum/minimum feedback connectivity of X/Y % means that a maximum or minimum of X% of the input/output nodes of 100% of the n2 cells ncj of the downstream network layer is potentially connected to the input/output nodes of maximum or minimum of Y% of the input/output nodes of 100% of the n1 cells nci of the downstream network layer for transmitting the resulting damped harmonic oscillations $h_j$ output from the corresponding input/output nodes of the n2 cells ncj of the downstream network layer to the input/output nodes IOi of the n1 cells nci of the upstream network layer. Accordingly, if corresponding maximum/minimum forward or feedback connectivity is given as N/M such 32/64, the corresponding maxima and minima are integer numbers and not percentages. Potentially connected means that the matrix $W$ in equations (9) or the matrices $W_k$ in equations (10) include corresponding matrix elements wi,j that can be different from 0, even if, as a result of the training, the corresponding element may finally be set to 0. Correspondingly, in hardware implementation, a corresponding connection element wi,j is present, that can be set to the corresponding transmission characteristic $T_{i,j} = w_{i,j} \times h_i$ with $w_{i,j} \in R$ and $|w_{i,j}| \leq 10$ as a result of the training.

The preferred frequencies of the DHOs in the first layer of the second NHHORNN were set as in the first one-layered NHHORNN, namely to be distributed over the frequency range of the input data of the variance of the power density spectrum of the input data. In the second NHHORNN, the preferred frequencies of the DHOs of the second layer were set to be lower than those of the first layer, namely the resonance frequencies in the second layer were set to 1/5 (20%) of the resonance frequencies of the first layer. Other choices are possible such as 1/2, 1/3, 1/4, 1/6, 1/8, 1/10 or 1/20 of the resonance frequencies. Preferred frequencies of the DHOs of the second layer may also be higher than the ones in the first layer, such as 2, 3, 4 or 5 times the resonance frequencies of the first layer.

In the second 128+128 NHHORNN, the 128 cells in the first layer had all-to-all connectivity between the 128 cells (= 100% forward and 100% feedback and self-connectivity within the layer), the 128 cells in the second layer had all-to-all connectivity between the 128 cells (= 100% forward and 100% feedback and self-connectivity within the layer), and the forward connectivity of the cells of the first layer was set to 100%, and the feedback connectivity of the cells of the second layer was set to 50%, in other words 100% feedforward connectivity and 50% feedback connectivity between the two layers.

The increase in performance between the one-layer NHHORNN and the two-layer NHHORNN with the same number of cells is shown in Fig. 7c) One of the reasons for this increase in performance is that the lower resonance frequencies of the second layer serve as a low pass filter and suppress the high-frequency components in the activity patterns of the first layer. These high-frequency components are usually due to input signals that are uncorrelated and therefore impair rather than support classification. Accordingly, the already significantly increased performance of one-layered NHHORNNs can be further increased by multi-layered NHHORNNs without increasing the number of cells, if the tasks become more complex and require more cells.

The NHHORNNs comprise in general a plurality of n cells with $n \geq 8$. The cells may be connected in an all-to-all connectivity but for larger numbers n of cells, such an all-to-all connectivity does not bring enough increase in performance versus the exploding complexity of the connections. Therefore, all-to-all connectivity is limited preferably to groups or sub-groups of na cells with $na \leq 512$, preferably $na \leq 256$, more preferably $na \leq 128$, even more preferably to $na \leq 64$ or $na \leq 32$ or $na \leq 16$ or na =9 or na=4, if n exceeds 512.

As discussed with respect to the above 128+128 two-layer NHHORNN, from a certain number of cells onwards, it is more effective to structure two or more layers of the network rather than increase the number of cells in a one-layer network. Alternatively or in combination, it is also effective to limit the number of connections within the same network layer. In addition, it may be preferable to provide more feedforward connections from an upstream layer to a downstream layer than feedback connections from the downstream layer to the upstream layer. In addition, it may be advantageous to set the parameters $\omega_{0i}$ = natural frequency of the undamped oscillations of the damped harmonic oscillators of the cells of the downstream network layer such that the highest natural frequency of the cells of the upstream network layer is higher than the highest natural frequency of the cells of the downstream network layer and the lowest natural frequency of the cells of the upstream network layer is higher than the lowest natural frequency of the cells of the downstream network layer. Preferably the natural frequencies in the downstream network layer are set to frequencies of 20% to 80% of the frequencies in the upstream network layer, more preferably 20% to 50% such as 20% or 30% or 40% or 50%.

For example, a first plurality of n1 cells is arranged in a first network layer L1, in which at least one of the cells is connected to the input unit and which is thus the most upstream layer in terms of forwarding data and processing results, and a second plurality of n2 cells is arranged in a second network layer L2, in which at least one of the cells is connected to at least one of the cells of the first layer and is therefore more downstream than the upstream (first) layer in terms of forwarding data and processing results. Of course, optionally third, fourth, fifth, sixth, ....x-th layers ($x \leq 1000$) can be added with n3, n4, n5, n6, ..... nx cells.

In particular, if the data to be processed have potentially strong interrelations between neighboring data points and potentially weak interrelations between distant data points such as in 2D image data, a possibly effective setup for designing a two layer network is the introduction of many connections wi,j between smaller groups of DHOs in the first (upstream) network layer such as all-to-all connectivity within a smaller group and fewer connections wi,j *between* these smaller groups of DHOs in the first (upstream) network layer resulting in 25% to 75% potential connections between the cells of the different smaller groups. The second (downstream) layer may have the same number of cells as the first layer or a smaller number. The number of feedforward connections from the cells of first (upstream) layer L1 to the cells of second (downstream) layer L2 is preferably higher, e.g. by 25% or 50% or 75% or 100% or 125% or 150% than the number/-percentage of feedback connections from the cells of second (downstream) layer L2 to the cells of first (upstream) layer L1. The same applies if a third, more downstream layer is added, etc.

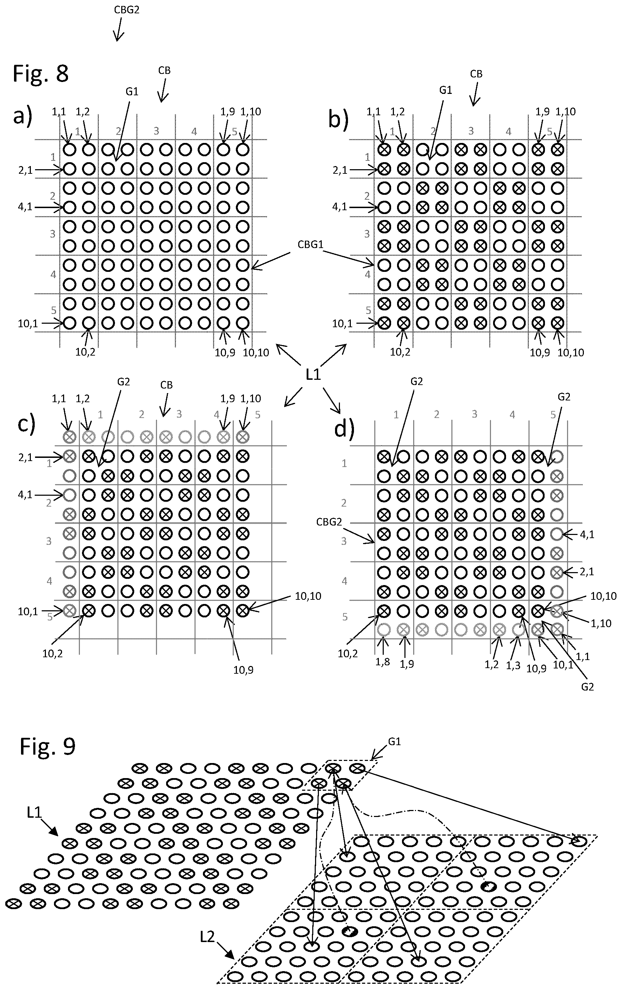

One example for such a two-layer network is described in Fig. 8 and 9.

In Fig. 8 a), a plurality of n1 = 100 cells are shown to be arranged in a 10x10 matrix CB. The cells can be indexed in rows k and columns l with k, l = 1, 2, ..., 5, i.e., with k, l. The matrix CB is only shown to explain the organization and connections of the cells and does not imply that a hardware implementation requires a physical arrangement of the cells in a matrix CB. A 5x5 chessboard pattern CBG1 is shown grouping the 100 cells into 25 first groups G1 of 4 cells each. In Fig. 8 b), the 4 cells in each of the 25 first groups G1 are marked alternately in rows and columns with a cross in every second group merely to ease identification of the cells in the first groups. The recurrent connection unit comprises connections for all-to-all connectivity for all cells in each of these 25 first groups G1.

Fig. 8 c) shows the 5x5 chessboard pattern CBG2 which is shifted by 1 cell in the row direction and 1 cell in the column direction in comparison to CBG1, in other words by 50% of the cells in one first group in both directions. This shift is used to create 25 second groups G2 of 4 cells each as follows: The shift creates a new set of 16 second groups G2 with 4 cells each, where each of the 4 cells was part of a different group of first groups G1. At the edges of the matrix CB, there are only two cells per "group" created by shifting the chessboard pattern, and at the four corners of the matrix, there is only one cell per "group" created by shifting the chessboard pattern. In order to organize the 100 cells in 25 second groups G2 with 4 cells each created by shifting the chessboard pattern, the 8 second groups G2 at the edges of the matrix in the shifting directions are "filled up" with the two remaining cells from the first groups G1 on the diagonally opposite sides/edges of the matrix, which are not included in one of the 16 second groups G2 already completed with 4 cells. And the second group G2 at the corner of the matrix in the shift directions including only one cell (10,10), is filled up with the 3 cells (1,1, 1,10 10,1) from the other three corners of the matrix. The corresponding second grouping is shown in Fig. 8 d). The recurrent connection unit comprises connections for all-to-all connectivity for all cells in each of these 25 second groups G2.

This organization provides many connections $w_{i,j}$ between the cells/DHOs of the first groups G1 in the first (upstream) network layer L1, such as in the described case all-to-all connectivity within the 25 first groups G1, and fewer connections $w_{i,j}$ between the first groups G1 of cells/DHOs in the first (upstream) network layer L1, namely 25% to each of the "neighbouring" first groups G1 by the second grouping and the all-to-all connectivity in the second groups G2 each including 4 (=25%) cells from four different first groups G1.

Of course, the above organization of the first network layer L1 is not limited to 10x10 = 100 cells grouped in 5x5 = 25 groups. The number $g1$ of cells per group can be any square of an integer with divider $2 \leq 256$, namely, 4, 16, 36, 64, ..., 256 and the grouping can be any grouping in a (u x v) matrix with u, v = u, v = 2, 3, 4, 5, 6, ... provided that the product $(g1 \cdot u \cdot v) \leq nmax$ such as 102400. In this description, we only discuss square matrix organizations (u=v) although the principle is equally applicable to rectangular organizations (u≠v). The limit of $g1 \leq 256$ is especially selected to limit the complexity of the connections in case of all-to-all connections. The above described organization by "chessboard pattern shifting" and following assignment to incomplete groups via diagonal assignment and grouping the 4 corners works to complete the second grouping for all these organizations of groups and provides the intended connection diversity within the first (upstream) layer.

The two-layered HORNN of Fig. 9 comprises the first (upstream) layer L1 described with respect to Fig. 8 and a second (downstream) layer L2 with a plurality of n2 of the n cells with $8 \leq n2$. In the example of Fig. 9, the second (downstream) layer L2 comprises the same number $n2 = n1$ of cells as the first (upstream) layer, which is only a non-limiting example to explain the principles.

As with all of the multi-layer RRNs of the present teachings, it is in general possible to implement each of the layers as a HHORNN or as a NHHORNN. That means, that the DHOs within one layer of the multi-layer network maybe implemented with identical intrinsic parameters $\beta$ and $\omega_0$ as HHORNN layer or with potentially different parameters $\beta_i$ and with at least some different parameters $\omega_{0i}$ as NHHORNN layer. This fact is not mentioned again every time for each example of multi-layered RNNs of the present teachings.

The recurrent connection unit RCU comprises at least one feedforward connection $w_{i,j}$ between at least one of the input/output nodes $IO_i$ of the cells $nc_i$ of each first group G1 of the first network layer L1, in the shown example one feedforward connection $w_{i,j}$ between the input/output nodes $IO_i$ of each of the cells $nc_i$ of each first group G1 of the first network layer L1, and the input/output node $IO_j$ of at least one of the cells $nc_j$ of the second network layer L2 for transmitting the resulting damped harmonic oscillation $h_i$ output from the input/output node of the one corresponding cell $nc_i$ of the first network layer to the input/output node of the corresponding one of the cells $nc_j$ of the second network layer, and at least one feedforward connection $w_{i,j}$ between the input/output node $IO_i$ of one of the cells $nc_i$ of each second group G2 of the first network layer and the input/output node $IO_j$ of at least one of the cells $nc_j$ of the second network layer L2 for transmitting the resulting damped harmonic oscillation $h_i$ output from the input/output node of the corresponding cell $nc_i$ of the first network layer to the input/output node of the corresponding one of the cells $nc_j$ of the second network layer (for the shown example this follows naturally because the input/output nodes $IO_i$ of each of the cells $nc_i$ of each first group G1 of the first network layer L1 are connected and thus inevitably also one cell of the corresponding second group G2), and at least one feedback connections $w_{j,i}$ to the input/output node $IO_i$ of one of the cells $nc_i$ of each first group G1 of the first network layer from the input/output node $IO_j$ of a corresponding number of the cells $nc_j$ of the second network layer L2 for transmitting the resulting damped harmonic oscillation $h_i$ output from the input/output node of the corresponding cells $nc_j$ of the second network layer L2.

The parameters $\omega_{0i}$ = natural frequency of the undamped oscillations of the damped harmonic oscillators of the n2 cells of the second network layer are set such that the highest natural frequency of the n1 cells of the first network layer is higher than the highest natural frequency of the n2 cells of the second network layer and optionally that the lowest natural frequency of the n1 cells of the first network layer is higher than the lowest natural frequency of the n2 cells of the second network layer. This setting will have the result that the second network layer acts as a kind of low pass filter for the signals/oscillations transmitted from the first network layer suppressing potentially unrelated high frequency components and thus improving the performance of the corresponding HHORNNs/NHHORNNs.

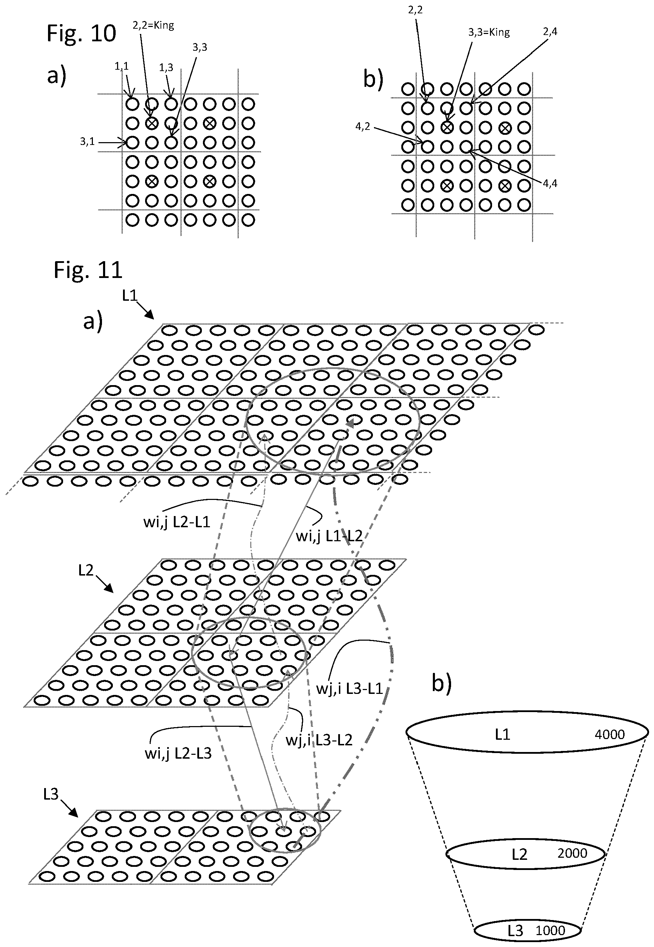

The arrangement of sub-groups of the cells with all-to-all connectivity in the layers is also not limited to the above-described chessboard pattern arrangement. For example, the well know King's graph arrangement deducted from the possible movements of the King in the chess game could be used. Such an arrangement is exemplary shown in Fig. 10 as a third embodiment, in which the cells are arranged in an assumed (or real) matrix arrangement in rows and columns and one cell, in the example the cell 2,2 (=King) is all-to-all connected to eight "neighbour cells", namely the one cell in the same column in the row above (cell 1,2) and its two direct neighbours (cells 1,1 and 1,3) in the row above, the one cell (cell 3,2) in the same column in the row below in its two direct neighbours (cells 3,1 and 3,3) in the row below, and the two direct neighbours (cells 2,1 and 2, 3) in the same row as shown in Fig. 8 a). Fig. 8 b) shows the King's graph arrangement for cell 3,3 as the "King", with all-to-all connectivity to the 8 neighbouring cells 2,2, 2,3 2,4, 3,2, 3,4, 4,2, 4,3 and 4,4.

Network of the types shown in Fig. 8 to 10 and other modified networks can be implemented in layered structures with 2,3, 4, 5, 6, 7, 8, ..., x layers (x ≤ 1000). If there are more than two layers, there can be layer skipping connectivity/connections. In particular useful is layer skipping feedback connectivity from more downstream layers to more upstream layers skipping one or more of the intermediate upstream layers such as, in a 4-layered network from the 4th (most downstream) layer to the 2nd or 1st layer skipping the 3rd or the 3rd and 2nd layers. Such skipping feedback connections help to refeed intermediate recognition "results" to establish a structure in which intermediate recognition results trigger activation of specific areas in the network. Such layer skipping feedback enhances the possibilities of resonance, entrainment, synchronization, phase shifts and desynchronization. A schematic example of a network including layer skipping feedback connectivity is shown in Fig. 11 a), where three layers L1, L2, L3 are present. The layers may be of the same or different types of layers (HHORNN or NHHORNN) and/or may have the same or different connectivity within the different layers. For example, the most upstream layer L1 could be implemented as HHORNN with all-to-all connectivity in the King's graph arrangement of Fig. 10 within the first layer L1, the second layer L2 could be implemented as NHHORNN with all-to-all connectivity in the chessboard arrangement of Fig. 8 within the second layer L2, and the most downstream (third) layer L3 could be implemented as NHHORNN with all-to-all connectivity in the King's graph arrangement of Fig. 10 in separate groups of 100 cells each within the third layer L3. There is feedforward connectivity ($w_{i,j}$, L1-L2 and wi,j L2-L3) and feedback connectivity (wj,i L3-L2 and wj,i L2-L1) between the adjacent layers, for example with increased connectivity between selected areas of cells in the first layer L1 and selected areas of cells in the second layer L2 and between selected areas of cells in the second layer L2 and selected areas of cells in the third layer L3 as schematically indicated in Fig. 11 a), and there is layer skipping feedback connectivity as indicated in Fig. 11 a) by the connection wj,i L3-L1 between the third layer L3 and the first layer L1.

With such arrangements limiting the all-to-all connectivity to sub-groups of cells as described above, the number of cells per layer can be increased very much without exploding complexity of the connections in software or hardware. Networks with 100000 cells or more in the most upstream layer become possible, and 10000 cells per layer are no problem, if the complexity of the tasks requires such extension. In Fig. 11 b), the three-layered network of Fig. 11 a) is schematically shown with 4000 cells in the first layer L1, 2000 cells in the second layer L2 and 1000 cells in the third layer L3 to exemplify the same.

If the information to be processed are of geometric nature such as image data or more generally express spatially invariant statistics, it can be advantageous to use HHORNNs as the first layer L1 on the input side. The reason is that the first layer L1 of the network can process, as a result, the input in a spatially invariant way.

In the following, it is explained how an implementation of an NHHORNN in semiconductor hardware can be made to set to the connection values and potential time delays after the network has been trained with the BPTT technique.

It is assumed that a number n of 1296 oscillators DHOi is arranged in a 36 × 36 matrix array on a semiconductor chip in conventional CMOS technology. Each of the oscillators DHOi is implemented e.g. as a ring oscillator in CMOS. The oscillators DHOi are all-to-all connected in the King's graph arrangement as described above in Fig. 8. The connection weights of the connections are set by multi-stage transmission gate coupling blocks providing the connections wi,j between the oscillators DHOi and DHOj. Such a multi-stage transmission gate coupling block may be implemented as shown in Fig. 2 of PA2. The coupling value of such a multi-stage transmission gate coupling block is set by the values stored in a memory implemented as SRAM, if the coupling weights should be reprogrammable, or as ROM, if not. A corresponding exemplary arrangement with SRAM is shown in Fig. 2 and 3 of PA2. Of course, this reference to PA2 is only a non-limiting example and a memory block controlling the amplification of CMOS implemented amplifiers for continuous setting of connection values can be used, wherein the potential reversal of the sign of the connection value is implemented with a single inverter switched into the connection wi,j or not.

The connection delays can be implemented by selecting/setting the number of staged inverters also controlled by corresponding SRAM or ROM memory blocks. If such delays are provided by staged inverters, they can be simultaneously used to set the potential weight inversion.

It is obvious in the above-described case that the sigmoid-like transfer function input element ICSi can be implemented as input element in CMOS as shown in US 2018/0307977 A1, with a CMOS implemented adder $ICA_i$ connected to each input element ICSi.

Such an implementation as CMOS ASIC will provide an extremely low power consumption for the trained HHORNN/NHHORNN.

The training of this CMOS NHHORNN is implemented using the well-known BPTT, and the values for the connection unit can be obtained in this way and then stored in the memory block, either as rewritable values when using a rewritable memory such as an SRAM or, if the final NHHORNN product should be not reprogrammable, in a ROM (or by melting fuses etc.).

The above descriptions of the HHORNNs and of the NHHORNNs with equations (9) or (10) provide a tool to implement the DHOs, their connections and the inputs and outputs, in other words the HHORNNs/NHHORNNs, in software and to run them on a correspondingly programmed data processing device such as a general purpose computer. That means, a method of calculating the oscillations performed by the DHOs is implemented by (i) creating a description of a corresponding RNN using equations (9) or (10) to define output data O (t) in response to input data S (t), (ii) input data S (t) representing data to be processed are input into the description resulting in a calculation of the oscillations caused by the input data (S (t) which result in the calculation of output data O (t) according to the description and the calculated oscillations, and (iii) outputting a processing result based on the output data resulting from the input data. The equations (9) or (10) capture, if no training has been performed, the initial setting of a RNN. In this case, the description can be used for training. If the training result is used to create the description of the RNN, the created description represents the trained RNN and thus a data processing tool providing the processing results of recognizing the objects/events represented by the corresponding input data S (t). Accordingly, a computer program including program code which implements, when run on a correspondingly programmed computer, the above described method, is one possible implementation of the HHORNNs/NHHORNNs of the present teachings.

The output data will often provide the processing result before all input data S(t) are input. For example, a 16 cell NHHORNN with all-to-all connectivity including self-connectivity trained for the MNIST data was always certain about the digit to be recognized with less than 50% input of the total input data S(t). Fig. 12 shows all 10 digits with a line representing the input data already input from the top of the image, when the RNN was certain about the result.

The HHORNNs and NHHORNNs were also very resilient to introduction of noise into the input data S(t) and also in this respect outperformed state of the art RNNs.

The recurrent neural network and the data processing method and devices of the present invention can be used, e.g., for diverse data processing tasks, which are challenging for state of the art techniques.

One first example is image segmentation and classification, such as detecting objects in digital images, or segmenting an image into a set of objects contained in the image. In the state of the art this task is often implemented by using feed forward neural networks, i.e. networks that have one input layer, intermediate layers and an output layer (deep neural networks). Examples are the Multilayer Perceptron, Convolutional Neural Networks, or Transformer networks. Using the intermediate layers, the network transforms the input pixel values into a representation suitable to solve a classification / detection / segmentation task, e.g. detecting traffic signs in a self-driving (autonomous) car. With the recurrent neural networks/data processing devices of the present teachings, a new, radically different approach is possible. A HORNN (both types NHHORNN and HHORNN) is recurrent in nature and receives the input as a time series. The network is implemented with several layers: as a first layer a geometrically organized HHORNN, followed by one HHORNN or NHHORNN layer, which is either geometrically organized or all to all, or a combination thereof. Geometrically organized means a connection structure (connectivity) within the layer with a limited number of connections to other cells which can be considered as next neighbors and thus as a geometric pattern such as the King's graph or the chessboard pattern described above or other corresponding next neighbor connection patterns. To present an image to the network, a matrix of n x m pixel values (each pixel having an intensity value between v_min and v_max, potentially for different color channels R, G, B) is turned into a time series of length N by sweeping the domain of values [v_min, v_max] from top to bottom (or from bottom to top) in discrete steps v_1=v_max, .., v_N = v_min. This yields a time series of length N where each time point is represented by a n x m matrix M_i ($1{\leq}i{\leq}N$), and the entries of M_i are set to 1 where the corresponding pixel value passed the threshold v_i, and 0 everywhere else. In other words, the topography of the n x m pixel values is sampled into N n x m matrices. The cells of the first layer of the network are stimulated according to the values in that time series.

Given some processing time, the network processes the input data. Multiple layers can form more abstract representations of the data, and either be geometrically organized (respecting geometric organization of input data, or all to all). After some time, the state of the network (answer) is read out. The network can develop internal measures for "knowing" when it found a good answer to the given input, e.g. by measuring the entropy of the dynamic state.

We note that the type of processing described in the first example is not limited to image data that possesses inherent spatial relationships, but can also be applied in the same way to other spatially organized data (such as sensor data obtained from spatially distributed sensors).

A second example is keyword spotting. Keyword spotting deals with the identification of keywords in utterances such as detecting the presence of wake words ("Hey, Siri", "Okay, Google") in a constant stream of recorded audio, e.g. for the purpose of smart devices (smart watch, smart phone, smart speaker) to go into a mode in which it accepts commands.

In the state of the art this task is often implemented in that microphone data (sound pressure levels) are recoded, digitized, chunked, MFCC extraction (described in https://de.wikipedia.org/wiki/Mel_Frequency_Cepstral_Coefficients) is performed, mapping to feature vectors is performed and then the sequence of feature vectors are fed to a dectection/-classifier unit (e.g. a recurrent neural network) to detect whether a keyword was detected in the audio recorded. An example procedure is shown in: https://github.com/MycroftAI/mycroft-precise#how-it-works. Software implementations are given in: https://github.com/Picovoice/porcupine, https://github.com/MycroftAI/mycroft-precise. With the recurrent neural networks/data processing devices of the present teachings, a new, radically different approach is possible, namely to feed the raw microphone data (sound pressure level) directly into a correspondingly trained NHHORN.

A third example is speech recognition. In the state of the art this task is often implemented similar to the keyword spotting in that microphone data (sound pressure levels) are recoded, digitized, chunked, MFCC extraction (described in https://de.wikipedia.org/wiki/Mel_Frequency_Cepstral_Coefficients) is performed, mapping to feature vectors is performed and then the sequence of feature vectors are fed to a dectection/classifier unit (e.g. a recurrent neural network, SVM, ..) to detect a sequence of words. Using information from a language model, likely sequences of words (e.g. sentences) are output. With the recurrent neural networks/data processing devices of the present teachings, a new, radically different approach is possible. Raw microphone data (sound pressure level) is fed without any pre-processing into a (correspondingly trained) multi-layer NHHORN. The nature of the NHHORNN provides for a potential tonotopic organization of the first layer, i.e., that cells coding for similar frequencies are more likely to be connected during training and therefore are connected during training, leading to a "geometric" organization of frequency space. Therefore, over the course of several layers, the network is able to form abstract representations of the input data, allowing for, e.g., transcribing syllables, words, sentences.

A fourth example is anomaly detection, i.e., identification of rare events in time series data which deviate from expected or normal behaviour (as defined from the majority of the data). In the state of the art systems this task is implemented by using different approaches from simple statistical tests to neural networks based methods: https://en.wikipedia.org/wiki/Anomaly_detection. With the recurrent neural networks/data processing devices of the present teachings, a new, radically different approach is possible. It is now possible to directly feed time series data value by value into a (correspondingly trained) HHORNN/NHHORNN, potentially multi-layered. Examples are simple tasks like EKG, EEG, MEG or other time series data from organisms, machines or processes. With the HHORNN/NHHORNNs it is not necessary to chunk the data or the like.

A fifth example is closed loop or feedback control. A closed loop or feedback control system is a system which aims at maintaining a prescribed relationship between two sets of system variables by comparing functions of these variables and using the difference as a means of control (https://en.wikipedia.org/wiki/Control_theory). Example applications are e.g. controlling chemical reactions (by means of controlling valves) or direction control of moving objects etc. With the recurrent neural networks/data processing devices of the present teachings, a new, radically different approach is possible. It is now possible to directly feed time series data representing measured variables into a (correspondingly trained) potentially mulit-layered HHORNN/NHHORNN trained to predict the dependent variables.

A sixth example is time series prediction and predictive analytics. Given historical values of a time series (e.g. sensor data), the task is to predict the development of the data in the future (https://en.wikipedia.org/wiki/Predictive_analytics). With the recurrent neural networks/data processing devices of the present teachings, a new, radically different approach is possible. It is now possible to directly feed time series data value by value into a (correspondingly trained) HHORNN/NHHORNN, potentially multi-layered.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

**Claims**

1. A neural network device comprising a recurrent neural network for processing the time-series input data (S (t)) that is implemented in electric digital or analogue hardware, comprising

a plurality of n damped electrical harmonic oscillators (DHOi, i = 1 to n), n ≥ 8, the oscillation of each of which follows the general second order differential equation for damped harmonic oscillators of $x_i(t)$: $x_i(t) + 2\beta_i x_i(t) + \omega_0^2 x_i(t) = 0$ with $\beta_i$ = damping factor and $\omega_{0i}$ = natural frequency of an undamped oscillation with $\beta_i = R_i/L_i$ and $\omega_{0i}^2 = 1/L_i C_i$, $R_i$ = resistance, $L_i$ = inductance and $C_i$ = capacity for a corresponding damped electrical RLC harmonic oscillator, each of the n damped electrical harmonic oscillators being one cell (nci) of the neural network,

each cell (nci) having an input/output node ($IO_i$) for receiving a cell input ($x_i$) in form of an electric input of the corresponding damped electrical harmonic oscillator and for outputting the resulting damped harmonic oscillation ($h_i$),

the input/output node ($IO_i$) comprising

an input connection ($IC_i$) adapted to receive any input to the cell and to output the same via a transistor implemented input ($ICS_i$) for the corresponding damped electrical harmonic oscillator DHOi having a non-linear transfer function as the cell input ($x_i$), and

an output connection ($OC_i$) adapted to output the resulting damped harmonic oscillation ($h_i$), and

a recurrent connection unit (RCU) comprising, for each of the cells ($c_i$), at least one connection (wi,j) between the input/output node ($IO_i$) of the corresponding cell (nci) and the input/output node ($IO_j$) of at least another one of the cells (ncj) for transmitting the resulting damped harmonic oscillation ($h_i$) output from the input/output node ($IO_i$) of the corresponding cell (nci) to the input/output node ($IO_j$) of the another one of the cells ($c_j$).

2. The neural network device according to claim 1, wherein
the at least one connection (wi,j) between the input/output node ($IO_i$) of the corresponding cell (nci) and the input/output node ($IO_j$) of the another one of the cells (ncj) of the recurrent connection unit (RCU) is set to a transmission characteristic $T_{i,j} = w_{i,j} \times h_i$ with $w_{i,j} \in R$ and $|w_{i,j}| \le 10$.

3. The neural network device according to claim 2, wherein
the at least one connection (wi,j) between the input/output node ($IO_i$) of the corresponding cell (nci) and the input/output node ($IO_j$) of the another one of the cells (ncj) of the recurrent connection unit (RCU) is implemented as an electric voltage divider or a transmission gate coupling for transmission of the output ($h_i$) of the corresponding damped electrical harmonic oscillator.

4. The neural network device according to any one of claims 1 to 3, wherein
the at least one connection (wi,j) between the input/output node ($IO_i$) of the corresponding cell (nci) and the input/output node ($IO_j$) of the another one of the cells (ncj) of the recurrent connection unit (RCU) is set to a transmission characteristic $T_{i,j}$ and delays the transmission by an output time delay $\partial t_{i,j} = k_{i,j} \times \Delta t$, $k_{i,j} = 0, 1, ...., k$, $0 \le k \le$ kmax, ti 1/10 $\le \Delta t \le$ ti 1 and $k_{i,j} \times \Delta t \le 50$ ti1, where ti1 is a time series interval of the time-series input data (S (t)) representing either the time interval between subsequent discrete values in case of discrete time-series input data (S (t)) or the time interval between subsequent sampling values of continuous time-series input data (S (t)). ,

5. The neural network device according to claim 4, wherein
the output time delay is implemented as an electric inductivity or a clocked output gate for transmission of the output ($h_i$) of a corresponding damped electrical harmonic oscillator.

6. The neural network device according to any preceding claim, wherein
the non-linear transfer function of the transistor implemented input ($ICS_i$) for the corresponding damped electrical harmonic oscillator DHOi is sigmoid-like.

7. The neural network device according to any preceding claim, wherein
the recurrent connection unit (RCU) comprises for at least one of the cells ($c_i$) a connection of the input/output node $IO_i$ of the corresponding damped harmonic oscillator DHOi to itself for input and for output, providing self-connectivity..

8. The neural network device according to any preceding claim, wherein

a plurality of n1 cells of the n cells with 8 ≤ n1 and with n1 ≤ n, are arranged in one first network layer (L1) and the recurrent connection unit (RCU) comprises, for each of the n1 cells ($c_i$), at least one connection (wi,j) between the input/output node ($IO_i$) of the corresponding cell (nci) of the first network layer (L1) and the input/output node ($IO_j$) of at least another one of the cells (ncj) of the first network layer (L1) for transmitting the resulting damped harmonic oscillation ($h_i$) output from the input/output node ($IO_i$) of the corresponding cell (nci) to the input/output node ($IO_j$) of the another one of the cells ($c_j$),

a plurality of n2 of the n cells with 8 ≤ n2 and preferably n2 ≤ n1, are arranged in a second downstream network layer (L2) and the recurrent connection unit (RCU) comprises, for each of the n2 cells ($c_i$), at least one connection ($wi,j$) between the input/output node ($IO_i$) of the corresponding cell ($nci$) of the second network layer (L2) and the input/output node ($IO_j$) of at least another one of the cells ($ncj$) of the second network layer (L2) for transmitting the resulting damped harmonic oscillation ($h_i$) output from the input/output node ($IO_i$) of the corresponding cell ($nci$) to the input/output node ($IO_j$) of the another one of the cells ($c_j$), and the recurrent connection unit (RCU) comprises feed forward connections ($wi,j$) between the input/output nodes ($IO_i$) of the n1 cells ($nci$) of the one (first) network layer and the input/output nodes ($IO_j$) of the n2 cells ($ncj$) of the second network layer for transmitting the resulting damped harmonic oscillation ($h_i$) output from the input/output nodes of the corresponding cells of the n1 cells ($nci$) of the one (first) network layer to the input/output nodes ($IO_j$) of the corresponding cells of the n2 cells ($ncj$) of the second network layer to establish a minimum potential feed forward connectivity of 10% and a maximum potential feed forward connectivity of 100%, and

feedback connections ($wj,i$) between the input/output nodes ($IO_j$) of the n2 cells ($ncj$) of the second network layer and the input/output nodes ($IO_i$) of the n1 cells ($nci$) of the one (first) network layer for transmitting the resulting damped harmonic oscillation ($h_j$) output from the input/output nodes of the corresponding cells of the n2 cells ($ncj$) of the second network layer to the input/output nodes ($IO_i$) of the corresponding cells of the n1 cells ($nci$) of the one (first) network layer to establish a minimum potential feedback connectivity of 10% and a maximum feedback connectivity of 100%, and

optionally a plurality of nr of the n cells with r = 3 or 4 or 5 or 6 and $8 \leq nr$ and preferably $nr \leq n(r-1)$, are arranged in an r-th network layer (Lr) and the recurrent connection unit (RCU) comprises, for each of the nr cells ($c_i$), at least one connection ($wi,j$) between the input/output node ($IO_i$) of the corresponding cell ($nci$) of the r-th network layer (Lr) and the input/output node ($IO_j$) of at least another one of the cells ($ncj$) of the r-th network layer (Lr) for transmitting the resulting damped harmonic oscillation ($h_i$) output from the input/output node ($IO_i$) of the corresponding cell ($nci$) to the input/output node ($IO_j$) of the another one of the cells ($c_j$), and the recurrent connection unit (RCU) comprises

feedforward connections ($wi,j$) between the input/output nodes ($IO_i$) of the n(r-1) cells ($nci$) of the n(r-1)-th network layer and the input/output nodes ($IO_j$) of the nr cells ($ncj$) of the nr-th network layer for transmitting the resulting damped harmonic oscillation ($h_i$) output from the input/output nodes of the corresponding cells ($nci$) of the n(r-1) cells ($nci$) of the n(r-1)-th network layer to the input/output nodes of the corresponding cells of the nr cells ($ncj$) of the nr-th network layer to establish a minimum potential feed forward connectivity of 10% and a maximum potential feed forward connectivity of 100%, and

feedback connections ($wj,i$) between the input/output nodes ($IO_j$) of the nr cells ($ncj$) of the nr-th network layer and the input/output nodes ($IO_i$) of the n(r-1) cells ($nci$) of the n(r-1)-th network layer for transmitting the resulting damped harmonic oscillation ($h_j$) output from the input/output nodes of the corresponding cells of the nr cells ($ncj$) of the n(r-1)-th network layer to the input/output nodes ($IO_i$) of the corresponding cells ($nci$) of the n(r-1)-th network layer to establish a minimum potential feedback connectivity of 10% and a maximum potential feedback connectivity of 100%, and

the recurrent connection unit (RCU) optionally comprises for at least one of the cells ($c_i$) of the r-th network layer (Lr) layer potential skipping feedback connections ($wi,j$) to at least one of the cells ($c_j$) of the (r-s)-th network layer (L(r-s)) with s = 2 or 3 or 4 or 5, and preferably at least 10%, more preferably at least 20% potential layer skipping feedback connectivity.

9. The neural network device according to any preceding claim, wherein
the plurality of n damped electric harmonic oscillators (DHOi, i = 1 to n) comprise at least two different types of damped harmonic oscillators, wherein each of the at least two different types of damped electric harmonic oscillator differs in at least the parameter $\omega_{0i}$ = natural frequency of an undamped oscillation from the other types of damped electric harmonic oscillators.

10. The neural network device according to claims 8 or 9, wherein
the parameters $\omega_{0i}$ = natural frequency of the undamped oscillations of the damped electric harmonic oscillators of the nr cells of the nr-th network layer with r = 2, 3, ... ,6, are set such that the highest natural frequency of the n(r-1) cells of the n(r-1)th network layer is higher than the highest natural frequency of the nr cells of the nr-th network layer and the lowest natural frequency of the n(r-1) cells of the n(r-1)-th network layer is higher than the lowest natural frequency of the nr cells of the nr-th network layer.

11. The neural network device according to any preceding claim, wherein
at least three different types of damped electric harmonic oscillators are provided and the parameters $\omega_{0i}$ = natural frequency of the undamped oscillations of the at least three different types of damped electric harmonic oscillators are set such that, based on a determination of the power spectral density of a plurality of samples of the time-series input data (S (t)) to be processed and the variance of these power spectral densities, the natural frequencies are distributed over the peaks of this variance with one of the at least three natural frequencies set to correspond to the peak of the variance with the lowest frequency and one of the at least three natural frequencies set to correspond to the peak of the variance with the highest amplitude, and the remaining natural frequencies set preferably to frequencies essentially uniformly distributed between the frequencies of these two peaks of the variance or in a normal distribution with chosen mean and variance.

12. The neural network device according to any preceding claim, wherein

i) each of the damped harmonic oscillators (DHOi, i = 1 to n) of the plurality of n damped harmonic oscillators is a corresponding damped electrical RLC harmonic oscillator DHOi implemented with voltage controlled oscillators as CMOS cross coupled differential oscillators or CMOS ring oscillators, each of the n damped harmonic oscillators being one cell (nci) of the neural network, and/or

ii) each cell (nci) has an input/output node ($IO_i$) for inputting the cell input ($x_i$) as an electric input of the corresponding damped electrical RLC harmonic oscillator via a sigmoid-like transfer function implementing CMOS inverter stage circuit ($ICS_i$), and/or

iii) each cell (nci) has an input/output node ($IO_i$) for receiving all inputs to the cell via an adder ($ICA_i$) adding all inputs to the cell and outputting the added inputs as input to a sigmoid-like transfer function implementing CMOS inverter stage circuit ($ICS_i$) outputting the cell input ($x_i$) as an electric input of the corresponding damped electrical RLC harmonic oscillator, and/or

iv) each of the connections ($w_{i,j}$) of the recurrent connection unit (RCU) is implemented as a (2p+1)-level transmission gate coupling with a first chain of at least 2 serially connected NOT gates coupled to receive the output of the outputting input/output node and a second chain of at least 2 serially connected NOT gates coupled to the other inputting input/output node and a block of 4p transmission gates connected between the outputs of the NOT gates of the first chain and the inputs of the NOT gates of the second chain with p ≤ 10 such that the transmission weight of the transmission characteristic $T_{i,j} = w_{i,j} \times h_i$ is $w_{i,j} = 0$, if none of the transmission gates is connected to the inputs and outputs of the NOT gates, $w_{i,j} = +w$, if 2w transmission gates are connected phase-correct between the outputs of the NOT gates of the first chain and the inputs of the NOT gates of the second chain, and $w_{i,j} = -w$, if 2w transmission gates are connected phase-shifted between the outputs of the NOT gates of the first chain and the inputs of the NOT gates of the second chain, and

optionally with a transmission output time delay $\partial t_{i,j} = k_{i,j} \times \Delta t$, $k_{i,j} = 0, 1, ...., k$, $0 \leq k \leq kmax$, $ti1/10 \leq \Delta t \leq ti$ 1 and $k_{i,j} \times \Delta t \leq 50ti1$, which output time delay is implemented by serially connecting a number l of clocked NOT gates between the output of the outputting input/output node and the other inputting input/output node either behind or in front of the NOT gates of the first and second chains, where the number l of clocked gates is determined as l = ($k_{i,j} \times \Delta t$) / clock time period, and

optionally with a weight setting block comprising one setting device for each of the a (2p+1)-level transmission gate couplings, which setting device is adapted to close or interrupt a connection via each of the corresponding 4p transmission gates either via permanent closing or interrupting through e.g. melting or etching the corresponding connection lines or not or via programmable closing or interrupting through CMOS transistors switched according to data stored in a SRAM or ROM memory block storing the set weights, and

optionally with a delay setting block comprising one setting device for each of the transmission output time delays $\partial t_{i,j}$, which setting device is adapted to close or interrupt a connection via the corresponding number of l clocked NOT gates either via permanent closing or interrupting through e.g. melting or etching the corresponding connection lines or not or via programmable closing or interrupting through CMOS transistors switched according to data stored in a SRAM or ROM memory block storing the set transmission output time delays $\partial t_{i,j}$.

**Patentansprüche**

1. Neuronale Netzwerkvorrichtung mit einem rekurrenten neuronalen Netzwerk zum Verarbeiten der Zeitreiheneingangsdaten (S (t)), das in elektrischer digitaler oder analoger Hardware implementiert ist, mit

einer Mehrzahl von n gedämpften elektrischen harmonischen Oszillatoren (DHOi, i = 1 bis n), n ≥ 8, deren Schwingung jeweils der allgemeinen Differentialgleichung zweiter Ordnung für gedämpfte harmonische Oszil-latoren mit $x_i(t)$: $x_i(t) + 2\beta_i x_i(t) + \omega_{0i}^2 x_i(t) = 0$ mit $\beta_i$ = Dämpfungsfaktor und $\omega_{0i}$ = Eigenfrequenz einer ungedämpften Schwingung mit $\beta_i = R_i/L_i$ und $\omega_{0i}^2 = 1/L_iC_i$, $R_i$ = Widerstand, $L_i$ = Induktivität und $C_i$ = Kapazität für einen entsprechenden gedämpften elektrischen harmonischen RLC-Schwingkreis folgt, wobei jeder der n gedämpften elektrischen harmonischen Oszillatoren eine Zelle (nci) des neuronalen Netzwerks ist,

jede Zelle (nci) einen Eingangs/Ausgangs-Knoten (IO$_i$) zum Empfangen einer Zelleingabe (x$_i$) in Form einer elektrischen Eingabe des entsprechenden gedämpften elektrischen harmonischen Oszillators und zum Ausgeben der resultierenden gedämpften harmonischen Schwingung (h$_i$) aufweist,
der Eingangs/Ausgangs-Knoten (IO$_i$)
eine Eingangsverbindung (IC$_i$), die zum Empfangen irgendeiner Eingabe in die Zelle und zum Ausgeben derselben über einen Transistor-implementierten Eingang (ICS$_i$) für den entsprechenden gedämpften elektrischen harmonischen Oszillator DHO$_i$ mit einer nicht-linearen Übertragungsfunktion als die Zelleingabe (x$_i$) angepasst ist, und
eine Ausgangsverbindung (OC$_i$), die zum Ausgeben der resultierenden gedämpften harmonischen Schwingung (h$_i$) angepasst ist, aufweist, und
einer rekurrenten Verbindungseinheit (RCU), die, für jede der Zellen (c$_i$), mindestens eine Verbindung (wi,j) zwischen dem Eingangs/Ausgangs-Knoten (IO$_i$) der entsprechenden Zelle (nci) und dem Eingangs/Ausgangs-Knoten (IO$_j$) mindestens einer anderen der Zellen (ncj) zum Übertragen der resultierenden gedämpften harmonischen Schwingung (h$_i$), die von dem Eingangs/Ausgangs-Knoten (IO$_i$) der entsprechenden Zelle (nci) ausgegeben wird, zu dem Eingangs-/Ausgangsknoten (IO$_j$) der anderen der Zellen (c$_j$) aufweist.

2. Neuronale Netzwerkvorrichtung nach Anspruch 1, bei der
die mindestens eine Verbindung (wi,j) zwischen dem Eingangs/Ausgangs-Knoten (IO$_i$) der entsprechenden Zelle (nci) und dem Eingangs/Ausgangs-Knoten (IO$_j$) der anderen der Zellen (ncj) der rekurrenten Verbindungseinheit (RCU) auf eine Übertragungscharakteristik $T_{i,j} = w_{i,j} \times h_i$ mit $w_{i,j} \in R$ und $|w_{i,j}| \leq 10$ gesetzt ist.

3. Neuronale Netzwerkvorrichtung nach Anspruch 2, bei der
die mindestens eine Verbindung (wi,j) zwischen dem Eingangs/Ausgangs-Knoten (IO$_i$) der entsprechenden Zelle (nci) und dem Eingangs/Ausgangs-Knoten (IO$_j$) der anderen der Zellen (ncj) der rekurrenten Verbindungseinheit (RCU) als ein elektrischer Spannungsteiler oder eine Übertragungsgatterkupplung zum Übertragen der Ausgabe (h$_i$) der entsprechenden gedämpften elektrischen harmonischen Schwingung implementiert ist.

4. Neuronale Netzwerkvorrichtung nach eine der Ansprüche 1 bis 3, bei der
die mindestens eine Verbindung (wi,j) zwischen dem Eingangs/Ausgangs-Knoten (IO$_i$) der entsprechenden Zelle (nci) und dem Eingangs/Ausgangs-Knoten (IO$_j$) der anderen der Zellen (ncj) der rekurrenten Verbindungseinheit (RCU) eingestellt ist auf eine Übertragungscharakteristik $T_{i,j}$ und die Übertragung um eine Ausgabezeitverzögerung $\partial t_{i,j} = k_{i,j} \times \Delta t$, $k_{i,j} = 0, 1, ...., k$, $0 \leq k \leq kmax$, $ti1/10 \leq \Delta t \leq ti\,1$ und $k_{i,j} \times \Delta t \leq 50\,ti\,1$ verzögert, bei der ti1 ein Zeitreihenintervall der Zeitreiheneingangsdaten (S (t)) ist, das entweder ein Zeitintervall zwischen aufeinanderfolgenden diskreten Werten im Fall diskreter Zeitreiheneingangsdaten (S (t)) oder das Zeitintervall zwischen aufeinanderfolgenden Abtastwerten von fortlaufenden Zeitserieneingangsdaten (S (t)) ist.

5. Neuronale Netzwerkvorrichtung nach Anspruch 4, bei der
die Ausgangszeitverzögerung implementiert ist als eine elektrische Induktivität oder ein getaktetes Ausgangsgatter zur Übertragung der Ausgabe (h$_i$) eines entsprechenden gedämpften elektrischen harmonischen Oszillators.

6. Neuronale Netzwerkvorrichtung nach einem der vorhergehenden Ansprüche, bei der die nicht-lineare Übertragungsfunktion des Transistor-implementierten Eingangs (ICS$_i$) für den entsprechenden gedämpften elektrischen harmonischen Oszillator DHOi Sigmoid-ähnlich ist.

7. Neuronale Netzwerkvorrichtung nach einem der vorhergehenden Ansprüche, bei der die rekurrente Verbindungseinheit (RCU) für mindestens eine der Zellen (c$_i$) eine Verbindung des Eingangs/Ausgangs-Knotens IO$_i$ des entsprechenden gedämpften harmonischen Oszillators DHOi mit sich selbst zur Eingabe und zur Ausgabe aufweist, was eine Selbst-Verbundenheit liefert.

8. Neuronale Netzwerkvorrichtung nach einem der vorhergehenden Ansprüche, bei der eine Mehrzahl von n1 Zellen der n Zellen mit $8 \leq n1$ und mit $n1 \leq n$ in einer ersten Netzwerkschicht (L1) angeordnet sind und die rekurrente Verbindungseinheit (RCU), für jede der n1 Zellen (c$_i$), mindestens eine Verbindung (wi,j) zwischen dem Eingangs/Ausgangs-Knoten (IO$_i$) der entsprechenden Zelle (nci) der ersten Netzwerkschicht (L1) und dem Eingangs/Ausgangs-Knoten (IO$_j$) mindestens einer anderen der Zellen (ncj) der ersten Netzwerkschicht (L1) zum Übertragen der resultierenden gedämpften harmonischen Schwingung (h$_i$), die von dem Eingangs/Ausgangs-Knoten (IO$_i$) der entsprechenden Zelle (nci) zu dem Eingangs/Ausgangs-Knoten (IO$_j$) der anderen der Zellen (c$_j$) ausgegeben wird, aufweist,

eine Mehrzahl von n2 der n Zellen mit $8 \leq n2$ und bevorzugt $n2 \leq n1$, in einer zweiten, stromabwärtigen Netzwerkschicht (L2) angeordnet sind und die rekurrente Verbindungseinheit (RCU), für jede der n2 Zellen ($c_i$), mindestens eine Verbindung (wi,j) zwischen dem Eingangs/Ausgangs-Knoten ($IO_i$) der entsprechenden Zelle (nci) der zweiten Netzwerkschicht (L2) und dem Eingangs/Ausgangs-Knoten ($IO_j$) mindestens einer anderen der Zellen (ncj) der zweiten Netzwerkschicht (L2) zum Übertragen der resultierenden gedämpften harmonischen Schwingung ($h_i$), die von dem Eingangs/Ausgangs-Knoten ($IO_i$) der entsprechenden Zelle (nci) zu dem Eingangs/Ausgangs-Knoten ($IO_j$) der anderen der Zellen ($c_j$) ausgegeben wird, aufweist, und
die rekurrente Verbindungseinheit (RCU)
Feed-Forward-Verbindungen (wi,j) zwischen den Eingangs/Ausgangs-Knoten ($IO_i$) der n1 Zellen (nci) der einen (ersten) Netzwerkschicht und den Eingangs/Ausgangs-Knoten ($IO_j$) der n2 Zellen (ncj) der zweiten Netzwerkschicht zum Übertragen der resultierenden gedämpften harmonischen Schwingung ($h_i$), die von den Eingangs/Ausgangs-Knoten der entsprechenden Zellen der n1 Zellen (nci) der einen (ersten) Netzwerkschicht zu den Eingangs/Ausgangs-Knoten ($IO_j$) der entsprechenden Zellen der n2 Zellen (ncj) der zweiten Netzwerkschicht ausgegeben werden, zum Etablieren einer minimalen potentiellen Feed-Forward-Verbundenheit von 10% und einer maximalen potentiellen Feed-Forward-Verbundenheit von 100%, und Feedback-Verbindungen (wj,i) zwischen den Eingangs/Ausgangsknoten ($IO_j$) der n2 Zellen (ncj) der zweiten Netzwerkschicht und den Eingangs/Ausgangs-Knoten ($IO_i$) der n1 Zellen (nci) der einen (ersten) Netzwerkschicht zum Übertragen der resultierenden gedämpften harmonischen Oszillation ($h_j$), die von den Eingangs/Ausgangs-Knoten der entsprechenden Zellen der n2 Zellen (ncj) der zweiten Netzwerkschicht an die Eingangs/Ausgangs-Knoten ($IO_i$) der entsprechenden Zellen der n1 Zellen (nci) der einen (ersten) Netzwerkschicht ausgegeben werden, zum Etablieren einer minimalen potentiellen Feedback-Verbundenheit von 10% und einer maximalen Feedback-Verbundenheit von 100%, aufweist, und
optional eine Mehzahl von nr der n Zellen mit $r = 3$ oder 4 oder 5 oder 6 und $8 \leq nr$ und bevorzugt $nr \leq n(r-1)$, in einer r-ten Netzwerkschicht (Lr) angeordnet sind und die rekurrente Verbindungseinheit (RCU), für jede der nr Zellen ($c_i$), mindestens eine Verbindung (wi,j) zwischen dem Eingangs/Ausgangs-Knoten ($IO_i$) der entsprechenden Zelle (nci) der r-ten Netzwerkschicht (Lr) und dem Eingangs/Ausgangs-Knoten ($IO_j$) der mindestens einen anderen der Zellen (ncj) der r-ten Netzwerkschicht (Lr) zum Übertragen der resultierenden gedämpften harmonischen Oszillation ($h_i$), die von dem Eingangs/Ausgangs-Knoten ($IO_i$) der entsprechenden Zelle (nci) an den Eingangs/Ausgangs-Knoten ($IO_j$) der anderen der Zellen ($c_j$) ausgegeben wird, aufweist, und
die rekurrente Verbindungseinheit (RCU)
Feed-Forward-Verbindungen (wi,j) zwischen den Eingangs/Ausgangs-Knoten ($IO_i$) der n(r-1) Zellen (nci) der n(r-1)-ten Netzwerkschicht und den Eingangs/Ausgangs-Knoten ($IO_j$) der nr Zellen (ncj) der nr-ten Netzwerkschicht zum Übertragen der resultierenden gedämpften harmonischen Oszillation ($h_i$), die von den Eingangs/Ausgangs-Knoten der entsprechenden Zellen (nci) der n(r-1) Zellen (nci) der n(r-1)-ten Netzwerkschicht an die Eingangs/Ausgangs-Knoten der entsprechenden Zellen der nr Zellen (ncj) der nr-ten Netzwerkschicht ausgegeben werden, zum Etablieren einer minimalen potentiellen Feed-Forward-Verbundenheit von 10% und einer maximalen potentiellen Feed-Forward-Verbundenheit von 100%, und
Feedback-Verbindungen (wj,i) zwischen den Eingangs/Ausgangs-Knoten ($IO_i$) der nr Zellen (ncj) der nr-ten Netzwerkschicht und den Eingangs/Ausgangs-Knoten ($IO_j$) der n(r-1) Zellen (nci) der n(r-1)-ten Netzwerkschicht zum Übertragen der resultierenden gedämpften harmonischen Oszillation ($h_j$), die von den Eingangs/Ausgangs-Knoten der entsprechenden Zellen der nr Zellen (ncj) der nr-ten Netzwerkschicht zu den Eingangs/Ausgangs-Knoten ($IO_i$) der entsprechenden Zellen (nci) der n(r-1)-ten Netzwerkschicht ausgegeben werden, zum Etablieren einer minimalen potentiellen Feedback-Verbundenheit von 10% und einer maximalen potentiellen Feedback-Verbundenheit von 100%, aufweist, und
die rekurrente Verbindungseinheit (RCU) optional für mindestens eine der Zellen ($c_i$) der r-ten Netzwerkschicht (Lr) potentielle schichtüberspringende Feedback-Verbindungen (wi,j) zu mindestens einer der Zellen ($c_i$) der (r-s)-ten Netzwerkschicht (L(r-s)) mit $s = 2$ oder 3 oder 4 oder 5, und bevorzugt mindestens 10%, bevorzugter mindestens 20% potentielle schichtüberspringender Feedback-Verbundenheit, aufweist.

9. Neuronale Netzwerkvorrichtung nach einem der vorhergehenden Ansprüche, bei der die Mehrzahl der n gedämpften elektrischen harmonischen Oszillatoren (DHOi, i = 1 bis n) mindestens zwei verschiedene Typen von gedämpften harmonischen Oszillatoren aufweist, bei denen jeder der mindestens zwei verschiedenen Typen von gedämpften harmonischen Oszillatoren sich in mindestens dem Parameter $\omega_{0i}$ = Eigenfrequenz einer ungedämpften Schwingung von den anderen Typen der gedämpften elektrischen harmonischen Oszillatoren unterscheidet.

10. Neuronale Netzwerkvorrichtung nach Anspruch 8 oder 9, bei der
die Parameter $\omega_{0i}$ = Eigenfrequenz der ungedämpften Schwingungen der gedämpften elektrischen harmonischen Oszillatoren der nr Zellen der nr-ten Netzwerkschicht mit $r = 2, 3, ... ,6$, derart eingestellt sind, dass die höchste Eigenfrequenz der n(r-1) Zellen der n(r-1)-ten Netzwerkschicht höher als die höchste Eigenfrequenz der nr Zellen der nr-ten Netzwerkschicht ist und die niedrigste Eigenfrequenz der n(r-1) Zellen der n(r-1)-ten Netzwerkschicht höher als die niedrigste Eigenfrequenz der nr Zellen der nr-ten Netzwerkschicht ist.

11. Neuronale Netzwerkvorrichtung nach einem der vorhergehenden Ansprüche, bei der mindestens drei unterschiedliche Typen von gedämpften elektrischen harmonischen Oszillatoren vorgesehen sind und die Parameter $\omega_{0i}$ = Eigenfrequenz der ungedämpften Schwingungen der mindestens drei unterschiedlichen Typen von gedämpften elektrischen harmonischen Oszillatoren derart eingestellt sind, dass, basierend auf einer Bestimmung der spektralen Leistungsdichte einer Mehrzahl von Proben der Zeitserieneingangsdaten (S (t)), die zu verarbeiten sind, und der Varianz dieser spektralen Leistungsdichten, Eigenfrequenzen über die Spitzen dieser Varianz so verteilt sind, dass eine der mindestens drei Eigenfrequenzen so eingestellt ist, dass sie der Spitze der Varianz mit der niedrigsten Frequenz entspricht, und eine der mindestens drei Eigenfrequenzen so eingestellt ist, dass sie der Spitze der Varianz mit der höchsten Amplitude entspricht, und die verbleibenden Eigenfrequenzen bevorzugterweise eingestellt sind auf Frequenzen, die im Wesentlichen gleichförmig zwischen den Frequenzen dieser beiden Spitzen der Varianz oder in einer Normalverteilung mit gewähltem Mean und Varianz verteilt sind.

12. Neuronale Netzwerkvorrichtung nach einem der vorhergehenden Ansprüche, bei der

   i) jeder der gedämpften harmonischen Oszillatoren (DHOi, i = 1 bis n) der Mehrzahl der n gedämpften harmonischen Oszillatoren ein entsprechender gedämpfter elektrischer harmonischer RLC-Schwingkreis DHOi ist, der mit spannungsgesteuerten Oszillatoren wie CMOSkreuzgekoppelten Differentialoszillatoren oder CMOS-Ringoszillatoren implementiert ist, wobei jeder der n gedämpften harmonischen Oszillatoren eine Zelle (nci) des neuronalen Netzwerks ist, und/oder

   ii) jede Zelle (nci) einen Eingangs/Ausgangs-Knoten ($IO_i$) zum Eingeben der Zelleneingabe ($x_i$) als eine elektrische Eingabe des entsprechenden gedämpften elektrischen harmonischen RLC-Schwingkreises über eine, eine Sigmoid-ähnliche Übertragungsfunktion implementierende, CMOS-Inverterstufenschaltung ($ICS_i$) aufweist, und/oder

   iii) jede Zelle (nci) einen Eingangs/Ausgangs-Knoten ($IO_i$) zum Empfangen aller Eingaben in die Zelle über einen Addierer ($ICA_i$), der alle Eingaben in die Zelle addiert und die addierten Eingaben ausgibt als Eingabe in eine, eine Sigmoid-ähnliche Übertragungsfunktion implementierende, CMOS-Inverterstufenschaltung ($ICS_i$) ausgibt, die die Zelleneingabe ($x_i$) als eine elektrische Eingabe des entsprechenden gedämpften elektrischen harmonischen RLC-Schwingkreises ausgibt, und/oder

   iv) jede der Verbindungen (wi,j) der rekurrenten Verbindungseinheit (RCU) implementiert ist als eine (2p+1)-Ebenen Übertragungsgatterkopplung mit einer ersten Kette von mindestens 2 in Reihe geschalteten NOT-Gattern, die zum Empfangen der Ausgabe des Eingabe/Ausgabe-Knotens gekoppelt ist, und einer zweiten Kette von mindestens zwei in Reihe geschalteten NOT-Gattern, die mit dem anderen eingebenden Eingangs/Ausgangs-Knoten gekoppelt ist, und einem Block von 4p Übertragungsgattern, die zwischen die Ausgänge der NOT-Gatter der ersten Kette und die Eingänge der NOT-Gatter der zweiten Kette mit $p \leq 10$ so verbunden sind, dass das Übertragungsgewicht der Übertragungscharakteristik $T_{i,j} = w_{i,j} \times h_i$ $w_{i,j} = 0$ ist, falls keines der Übertragungsgatter mit den Eingängen und Ausgängen der NOT-Gatter verbunden ist, $w_{i,j} = +w$, falls 2w Übertragungsgatter phasenkorrekt zwischen die Ausgänge der NOT-Gatter der ersten Kette und die Eingänge der NOT-Gatter der zweiten Kette verbunden sind, und $w_{i,j} = -w$, falls 2w Übertragungsgatter phasen-verschoben zwischen die Ausgänge der NOT-Gatter der ersten Kette und die Eingänge der NOT-Gatter der zweiten Kette verbunden sind, implementiert ist, und

   optional mit einer Übertragungsausgabezeitverzögerung $\partial t_{i,j} = k_{i,j} \times \Delta t$, $k_{i,j} = 0, 1, ...., k$, $0 \leq k \leq kmax$, $ti1/10 \leq \Delta t \leq ti1$ und $k_{i,j} \times \Delta t \leq 50ti1$, welche Ausgabezeitverzögerung implementiert ist durch in Reihe schalten einer Anzahl I von getakteten NOT-Gattern zwischen den Ausgang des ausgebenden Eingangs/Ausgangs-Knotens und den anderen eingebenden Eingangs-Ausgangs-Knotens entweder hinter oder vor den NOT-Gattern der ersten und zweiten Ketten, wobei die Anzahl I der getakteten Gatter bestimmt ist als I = ($k_{i,j} \times \Delta t$) / Taktzeitperiode, und

   optional mit einem Gewichtseinstellblock, der eine Einstellungsvorrichtung für jede der (2p+1)-Niveauübertragungsgatterkopplungen aufweist, welche Einstellungsvorrichtung angepasst ist zum Schließen oder Unterbrechen einer Verbindung über jedes der entsprechenden 4p Übertragungsgatter, entweder durch ein permanentes Schließen oder Unterbrechen durch z.B. Schmelzen oder Ätzen der entsprechenden Verbindungsleitung oder nicht oder durch ein programmierbares Schließen oder Unterbrechen mittels CMOS-Transistoren, die entsprechend Daten geschaltet werden, die in einem SRAM oder ROM Speicherblock, der die Einstellungsgewichte speichert, gespeichert sind, und

   optional mit einem Verzögerungseinstellblock, der eine Einstellungsvorrichtung für jede der Übertragungsausgabezeitverzögerungen $\partial t_{i,j}$ aufweist, welche Einstellungsvorrichtung angepasst ist zum Schließen oder Unterbrechen einer Verbindung über die entsprechende Anzahl von l getakteten NOT-Gattern entweder durch permanentes Schließen oder Unterbrechen durch z.B. Schmelzen oder Ätzen der entsprechenden Verbindungsleitungen oder nicht oder durch programmierbares Schließen oder Unterbrechen mittels CMOS-Transistoren, die entsprechend Daten geschaltet werden, die in einem SRAM oder ROM Speicherblock gespeichert sind, der die eingestellten Übertragungsausgangszeitverzögerung $\partial t_{i,j}$ speichert.

**Revendications**

1. Dispositif de réseau neuronal comprenant un réseau neuronal récurrent pour traiter les données d'entrée de série chronologique (S (t)) qui est mis en œuvre dans un matériel électrique numérique ou analogique, comprenant

   une pluralité de n oscillateurs harmoniques électriques amortis (DHOi, i = 1 à n), n ≥ 8, dont l'oscillation de chacun suit l'équation différentielle générale du second ordre pour les oscillateurs harmoniques amortis $x_i(t)$: $x_i(t) + 2\beta_i x_i(t) + \omega_{0i}^2 x_i(t) = 0$ avec $\beta_i$ = facteur d'amortissement et $\omega_{0i}$ = fréquence naturelle d'une oscillation non amortie avec $\beta_i = R_i/L_i$ et $\omega_{0i}^2 = 1/L_i C_i$, $R_i$ = résistance, $L_i$ = inductance et $C_i$ = capacité pour un oscillateur harmonique RLC électrique amorti correspondant, chacun des n oscillateurs harmoniques électriques amortis étant une cellule (nci) du réseau neuronal,
   chaque cellule (nci) ayant un nœud d'entrée/sortie (IOj) pour recevoir une entrée de cellule (xi) sous la forme d'une entrée électrique de l'oscillateur harmonique électrique amorti correspondant et pour émettre l'oscillation harmonique amortie résultante (hi),
   le nœud d'entrée/sortie (IOj) comprenant
   une connexion d'entrée (ICi) adaptée à la réception de toute entrée dans la cellule et à la sortie de celle-ci via une entrée mise en œuvre par transistor (ICSi) pour l'oscillateur harmonique électrique amorti correspondant DHOi ayant une fonction de transfert non linéaire en tant qu'entrée de cellule (xi), et
   une connexion de sortie (OCi) adaptée à la sortie de l'oscillation harmonique amortie résultante (hi), et
   une unité de connexion récurrente (RCU) comprenant, pour chacune des cellules (ci), au moins une connexion (wi,j) entre le nœud d'entrée/sortie (IOi) de la cellule correspondante (nci) et le nœud d'entrée/sortie (IOj) d'au moins une autre des cellules (ncj) pour transmettre l'oscillation harmonique amortie (hi) résultante émise du nœud d'entrée/sortie (IOi) de la cellule correspondante (nci) au nœud d'entrée/sortie (IOj) de ladite une autre des cellules (cj).

2. Dispositif de réseau neuronal selon la revendication 1, dans lequel ladite au moins une connexion (wi,j) entre le nœud d'entrée/sortie (IOi) de la cellule correspondante (nci) et le nœud d'entrée/sortie (IOj) de ladite une autre des cellules (ncj) du réseau récurrent (RCU) est fixée à une caractéristique de transmission $T_{i,j} = W_{(i,j)} \times h_i$ avec $w_{i,j} \in R$ et $|w_{i,j}| \leq 10$.

3. Dispositif de réseau neuronal selon la revendication 2, dans lequel ladite au moins une connexion (wi,j) entre le nœud d'entrée/sortie (IOi) de la cellule correspondante (nci) et le nœud d'entrée/sortie (IOj) de ladite une autre des cellules (ncj) de l'unité de connexion récurrente (RCU) est mise en œuvre comme un diviseur de tension électrique ou un couplage de porte de transmission pour la transmission de la sortie (hi) de l'oscillateur harmonique électrique amorti correspondant.

4. Dispositif de réseau neuronal selon l'une quelconque des revendications 1 à 3, dans lequel
   ladite au moins une connexion (wi,j) entre le nœud d'entrée/sortie (IOi) de la cellule correspondante (nci) et le nœud d'entrée/sortie (IOj) ladite une autre des cellules (ncj) de l'unité de connexion récurrente (RCU) est réglée sur une caractéristique de transmission $T_{i,j}$ et retarde la transmission d'un délai de sortie $\partial t_{i,j} = k_{i,j} \times \Delta t$, $k_{i,j} = 0, 1, ...., k$, $0 \leq k \leq$ kmax, ti 1/10 ≤ Δt ≤ t 1 et $k_{i,j} \times \Delta t \leq 50$ ti1, où ti1 est un intervalle de série chronologique des données d'entrée de série chronologique (S (t)) représentant soit l'intervalle de temps entre les valeurs discrètes suivantes dans le cas de données d'entrée de série chronologique discrète (S (t)), soit l'intervalle de temps entre les valeurs d'échantillonnage suivantes de données d'entrée de série chronologique continue (S (t))., suivantes de données d'entrée de série chronologique continue (S (t)).,

5. Dispositif de réseau neuronal selon la revendication 4, dans lequel
   le délai de sortie est mise en œuvre sous la forme d'une inductivité électrique ou d'une porte de sortie cadencée pour la transmission de la sortie (hi) d'un oscillateur harmonique électrique amorti correspondant.

6. Dispositif de réseau neuronal selon l'une quelconque des revendications précédentes, dans lequel la fonction de transfert non linéaire de l'entrée mise en œuvre par le transistor (ICSi) pour l'oscillateur harmonique électrique amorti correspondant DHOi est de type *sigmoïde*.

**7.** Dispositif de réseau neuronal selon l'une quelconque des revendications précédentes, dans lequel l'unité de connexion récurrente (RCU) comprend pour au moins une des cellules ($c_i$) une connexion du nœud d'entrée/sortie $IO_i$ de l'oscillateur harmonique amorti DHOi correspondant à lui-même pour l'entrée et pour la sortie, fournissant une autoconnectivité.

**8.** Dispositif de réseau neuronal selon l'une quelconque des revendications précédentes, dans lequel une pluralité de cellules n1 des cellules n avec $8 \leq n1$ et avec $n1 \leq n$, sont disposées dans une première couche de réseau (L1) et l'unité de connexion récurrente (RCU) comprend, pour chacune des cellules n1 ($c_i$), au moins une connexion (wi,j) entre le nœud d'entrée/sortie ($IO_i$) de la cellule correspondante (nci) de la première couche de réseau (L1) et le nœud d'entrée/sortie ($IO_j$) d'au moins une autre des cellules (ncj) de la première couche de réseau (L1) pour transmettre l'oscillation harmonique amortie ($h_i$) résultante émise du nœud d'entrée/sortie ($IO_i$) de la cellule correspondante (nci) au nœud d'entrée/sortie ($IO_j$) de ladite autre des cellules ($c_j$),

une pluralité de n2 des cellules n avec $8 \leq n2$ et de préférence $n2 \leq n1$, sont disposées dans une deuxième couche de réseau en aval (L2) et l'unité de connexion récurrente (RCU) comprend, pour chacune des cellules n2 ($c_i$), au moins une connexion (wi,j) entre le nœud d'entrée/sortie ($IO_i$) de la cellule correspondante (nci) de la deuxième couche de réseau (L2) et le nœud d'entrée/sortie ($IO_j$) d'au moins une autre des cellules (ncj) de la deuxième couche de réseau (L2) pour transmettre l'oscillation harmonique amortie (hi) résultante émise du nœud d'entrée/sortie ($IO_i$) de la cellule correspondante (nci) au nœud d'entrée/sortie (IOj) de ladite autre des cellules (cj), et l'unité de connexion récurrente (RCU) comprend des connexions d'action directe (wi,j) entre les nœuds d'entrée/sortie ($IO_i$) des cellules n1 (nci) de ladite une (première) couche de réseau et les nœuds d'entrée/sortie ($IO_j$) des cellules n2 (ncj) de la deuxième couche de réseau pour transmettre l'oscillation harmonique amortie ($h_i$) résultante émise des nœuds d'entrée/sortie des cellules correspondantes des cellules n1 (nci) de ladite une (première) couche de réseau aux nœuds d'entrée/sortie ($IO_j$) des cellules correspondantes des cellules n2 (ncj) de la deuxième couche de réseau afin d'établir une connectivité d'action directe potentielle minimale de 10 % et une connectivité d'action directe potentielle maximale de 100 %, et des connexions de rétroaction (wj,i) entre les nœuds d'entrée/sortie ($IO_j$) des cellules n2 (ncj) de la deuxième couche de réseau et les nœuds d'entrée/sortie ($IO_i$) des cellules n1 (nci) de ladite une (première) couche de réseau pour transmettre l'oscillation harmonique amortie ($h_j$) résultante émise des nœuds d'entrée/sortie des cellules correspondantes des cellules n2 (ncj) de la deuxième couche de réseau aux nœuds d'entrée/sortie ($IO_i$) des cellules correspondantes des cellules n1 (nci) de ladite (première) couche de réseau pour établir une connectivité de rétroaction potentielle minimale de 10 % et une connectivité de rétroaction maximale de 100 %, et éventuellement une pluralité de nr des cellules n avec r = 3 ou 4 ou 5 ou 6 et $8 \leq nr$ et de préférence $nr \leq n(r-1)$, sont disposées dans une r-ième couche de réseau (Lr) et l'unité de connexion récurrente (RCU) comprend, pour chacune des cellules nr ($c_i$), au moins une connexion (wi,j) entre le nœud d'entrée/sortie ($IO_i$) de la cellule correspondante (nci) de la r-ième couche de réseau (Lr) et le nœud d'entrée/sortie ($IO_j$) d'au moins une autre des cellules (ncj) de la r-ième couche de réseau (Lr) pour transmettre l'oscillation harmonique amortie (hi) résultante émise du nœud d'entrée/sortie ($IO_i$) de la cellule correspondante (nci) au nœud d'entrée/sortie ($IO_j$) de l'autre des cellules ($c_j$), et l'unité de connexion récurrente (RCU) comprend des connexions d'action directe (wi,j) entre les nœuds d'entrée/sortie ($IO_i$) des cellules n(r-1) (nci) de la n(r-1)-ième couche de réseau et les nœuds d'entrée/sortie ($IO_j$) des cellules nr (ncj) de la nr-ième couche de réseau pour transmettre l'oscillation harmonique amortie ($h_i$) résultante émise des nœuds d'entrée/sortie des cellules (nci) correspondantes des cellules n(r-1) (nci) de la n(r-1)-ième couche de réseau aux nœuds d'entrée/sortie des cellules correspondantes des cellules nr (ncj) de la nr-ième couche de réseau afin d'établir une connectivité d'action directe potentielle minimale de 10 % et une connectivité d'action directe potentielle maximale de 100 %, et des connexions de rétroaction (wj,i) entre les nœuds d'entrée/sortie ($IO_j$) des cellules nr (ncj) de la nr-ième couche de réseau et les nœuds d'entrée/sortie ($IO_i$) des n(r-1) cellules (nci) de la n(r-1)-ième couche de réseau pour transmettre l'oscillation harmonique amortie ($h_j$) résultante émise des nœuds d'entrée/sortie des cellules correspondantes des cellules nr (ncj) de la n(r-1)-ième couche de réseau aux nœuds d'entrée/sortie ($IO_i$) des cellules correspondantes (nci) de la n(r-1)-ième couche de réseau pour établir une connectivité de rétroaction potentielle minimale de 10 % et une connectivité de rétroaction potentielle maximale de 100 %, et l'unité de connexion récurrente (RCU) comprend éventuellement, pour au moins une des cellules (ci) de la r-ième couche de réseau (Lr), des connexions de rétroaction de saut potentielles (wi,j) vers au moins une des cellules ($c_i$) de la (r-s)-ième couche de réseau (L(r-s)) avec s = 2 ou 3 ou 4 ou 5, et de préférence au moins 10 %, plus préférentiellement au moins 20 % de connectivité de rétroaction de saut de couche potentielle.

**9.** Dispositif de réseau neuronal selon l'une quelconque des revendications précédentes, dans lequel la pluralité de n oscillateurs harmoniques électriques amortis (DHOi, i = 1 à n) comprend au moins deux types différents d'oscillateurs harmoniques amortis, dans lequel chacun desdits au moins deux types différents d'oscillateurs harmoniques électriques amortis diffère des autres types d'oscillateurs électriques harmoniques amortis au moins par le paramètre $\omega_{0i}$ = fréquence naturelle d'une oscillation non amortie.

**10.** Dispositif de réseau neuronal selon les revendications 8 ou 9, dans lequel les paramètres $\omega_{0i}$ = fréquence naturelle des oscillations non amorties des oscillateurs harmoniques électriques amortis des cellules nr de la nr-ième couche de réseau avec r = 2, 3, ... 6, sont fixés de telle sorte que la fréquence naturelle la plus élevée des cellules n(r-1) de la n(r-1)-ième couche de réseau soit supérieure à la fréquence naturelle la plus élevée des cellules nr de la nr-ième couche de réseau et que la fréquence naturelle la plus basse des cellules n(r-1) de la n(r-1)-ième couche de réseau soit supérieure à la fréquence naturelle la plus basse des cellules nr de la nr-ième couche de réseau.

**11.** Dispositif de réseau neuronal selon l'une quelconque des revendications précédentes, dans lequel au moins trois types différents d'oscillateurs harmoniques électriques amortis sont fournis et les paramètres $\omega_{0i}$ = fréquence naturelle des oscillations non amorties desdits au moins trois types différents d'oscillateurs harmoniques électriques amortis sont définis de telle sorte que, sur la base d'une détermination de la densité spectrale de puissance d'une pluralité d'échantillons des données d'entrée de série chronologique (S (t)) à traiter et de la variance de ces densités spectrales de puissance, les fréquences naturelles soient réparties sur les pics de cette variance, l'une desdites au moins trois fréquences naturelles réglée pour correspondre au pic de la variance ayant la fréquence la plus basse et l'une desdites au moins trois fréquences naturelles réglée pour correspondre au pic de la variance ayant l'amplitude la plus élevée, et les fréquences naturelles restantes étant de préférence réglées sur des fréquences essentiellement uniformément réparties entre les fréquences de ces deux pics de la variance ou selon une distribution normale dont la moyenne et la variance sont choisies.

**12.** Dispositif de réseau neuronal selon l'une quelconque des revendications précédentes, dans lequel

i) chacun des oscillateurs harmoniques amortis (DHOi, i = 1 à n) de la pluralité de n oscillateurs harmoniques amortis est un oscillateur harmonique RLC électrique amorti correspondant DHOi mis en œuvre avec des oscillateurs commandés en tension en tant qu'oscillateurs différentiels à couplage transversal CMOS ou des oscillateurs en anneau à CMOS, chacun des oscillateurs harmoniques amortis n étant une cellule (nci) du réseau neuronal, et/ou

ii) chaque cellule (nci) a un nœud d'entrée/sortie (IOi) pour l'entrée de la cellule (xi) en tant qu'entrée électrique de l'oscillateur harmonique RLC électrique amorti correspondant via une fonction de transfert de type sigmoïde mettant en œuvre le circuit d'étage inverseur CMOS (ICSi), et/ou

iii) chaque cellule (nci) possède un nœud d'entrée/sortie (IOi) pour recevoir toutes les entrées de la cellule par l'intermédiaire d'un additionneur (ICAi) additionnant toutes les entrées de la cellule et émettant les entrées additionnées en tant qu'entrée d'un circuit d'étage inverseur CMOS (ICSi) mettant en œuvre une fonction de transfert de type sigmoïde, émettant l'entrée de cellule (xi) en tant qu'entrée électrique de l'oscillateur harmonique RLC électrique amorti correspondant, et/ou

iv) chacune des connexions (wi,j) de l'unité de connexion récurrente (RCU) est mise en œuvre sous la forme d'un couplage de portes de transmission de niveau (2p+1) avec une première chaîne d'au moins 2 portes NON connectées en série et couplées pour recevoir la sortie du nœud d'entrée/sortie de sortie et une deuxième chaîne d'au moins 2 portes NON connectées en série et couplées à l'autre nœud d'entrée/sortie d'entrée et un bloc de portes de transmission 4p connectées entre les sorties des portes NON de la première chaîne et les entrées des portes NON de la deuxième chaîne avec $p \leq 10$ de telle sorte que le poids de transmission de la caractéristique de transmission $T_{i,j} = w_{i,j} \times h_i$ est $w_{i,j} = 0$, si aucune des portes de transmission n'est connectée aux entrées et aux sorties des portes NON, $w_{i,j} = +w$, si des portes de transmission 2w sont connectées en phase correcte entre les sorties des portes NON de la première chaîne et les entrées des portes NON de la deuxième chaîne, et $w_{i,j} = -w$, si des portes de transmission 2w sont connectées en phase déphasée entre les sorties des portes NON de la première chaîne et les entrées des portes NON de la deuxième chaîne, et éventuellement avec un délai de sortie de transmission $\partial t_{i,j} = k_{i,j} \times \Delta t$, $k_{i,j} = 0, 1, ...., k, 0 \leq k \leq kmax$, $ti1/10 \leq \Delta t \leq ti1$ et $k_{i,j} \times \Delta t \leq 50ti1$, ce délai de sortie étant mis en œuvre en connectant en série un nombre 1 de portes NON cadencées entre la sortie du nœud d'entrée/sortie de sortie et l'autre nœud d'entrée/sortie d'entrée, soit derrière, soit devant les portes NON des première et deuxième chaînes, où le nombre 1 de portes cadencées est déterminé comme $1 = (k_{i,j} \times \Delta t)$ / période de temps d'horloge, et éventuellement avec un bloc de réglage de poids comprenant un dispositif de réglage pour chacun des couplages de porte de transmission de niveau a (2p+1), lequel dispositif de réglage est adapté pour fermer ou interrompre une connexion via chacune des portes de transmission 4p correspondantes, soit par une fermeture ou une interruption permanente, par exemple en faisant fondre ou en gravant les lignes de connexion correspondantes, soit par une fermeture ou une interruption programmable via des transistors CMOS commutés en fonction des données stockées dans un bloc de mémoire SRAM ou ROM stockant les poids réglés, et

éventuellement avec un bloc de réglage des délais comprenant un dispositif de réglage pour chacun des délais de sortie de transmission $\partial t_{i,j}$, ce dispositif de réglage étant adapté pour fermer ou interrompre une connexion via le nombre correspondant de 1 portes NON cadencées, soit par une fermeture ou une interruption permanente, par exemple en faisant fondre ou en gravant les lignes de connexion correspondantes, soit par une fermeture ou une interruption programmable via des transistors CMOS commutés en fonction des données stockées dans un bloc de mémoire SRAM ou ROM stockant les délais de sortie de transmission définis $\partial t_{i,j}$,

Fig. 1

Fig. 2

Fig. 3

Fig. 4

Fig. 5

a)

b)

c)

Fig. 6

a)

b)

Fig. 12

## Fig. 7

a)

b)

c)

2 layers  128 + 128 cells

1 layer 256 cells

Fig. 8

a)

b)

c)

d)

Fig. 9

Fig. 10

a)

b)

Fig. 11

a)

b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180307977 A1

**Non-patent literature cited in the description**

- **N. BENJAMIN ERICHSON et al.** LIPSCHITZ RECURRENT NEURAL NETWORKS. *arXiv:2006.12070v3 [cs.LG*, 24 April 2021
- **ADAM P. TRISCHLER et al.** Synthesis of recurrent neural networks for dynamical system simulation. *Neural Networks*, vol. 80 (67-78)
- **M. ROMERA et al.** Vowel recognition with four coupled spintorque nano-oscillators. *Nature*, 2018, vol. 563, 230-234
- **M. ROMERA et al.** Binding events through the mutual synchronization of spintronic nanoneurons. *Nat. Commun.*, 2022, vol. 13, 883
- **T. KONSTANTIN RUSCH** ; **SIDDHARTHA MISHRA**. COUPLED OSCILLATORY RECURRENT NEURAL NETWORK (CORNN): AN ACCURATE AND (GRADIENT) STABLE ARCHITECTURE FOR LEARNING LONG TIME DEPENDENCIES. *arXiv: 2010.00951v2 [cs.LG*, 14 March 2021
- **W. MOY et al.** A 1,968-node coupled ring oscillator circuit for combinatorial optimization problem solving. *Nat Electron*, 2022